(19) Europäisches Patentamt / European Patent Office / Office européen des brevets

(11) **EP 4 787 056 A1**

(12) **EUROPEAN PATENT APPLICATION**
published in accordance with Art. 153(4) EPC

(43) Date of publication:
05.08.2026 Bulletin 2026/32

(21) Application number: 25880931.8

(22) Date of filing: 18.09.2025

(51) International Patent Classification (IPC):
*G02B 27/02* (2006.01)

(52) Cooperative Patent Classification (CPC):
B60K 35/21; G02B 5/30; G02B 5/32; G02B 27/01;
G02B 27/02; G02B 30/26

(86) International application number:
PCT/JP2025/032891

(87) International publication number:
WO 2026/100218 (15.05.2026 Gazette 2026/20)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 11.11.2024 PCT/JP2024/040045
09.05.2025 PCT/JP2025/017146

(71) Applicant: Kyocera Corporation
Kyoto-shi, Kyoto 612-8501 (JP)

(72) Inventors:
• KUSAFUKA, Kaoru
  Kyoto-shi, Kyoto 612-8501 (JP)
• SATOU, Akinori
  Kyoto-shi, Kyoto 612-8501 (JP)
• MATSUDA, Kazumasa
  Kyoto-shi, Kyoto 612-8501 (JP)
• SHIMADA, Takashi
  Kyoto-shi, Kyoto 612-8501 (JP)

(74) Representative: TBK
Bavariaring 4-6
80336 München (DE)

(54) **DISPLAY DEVICE, MOBILE BODY, AND DISPLAY PANEL-HOUSING DEVICE**

(57)  A display device not mounted on a user, the display device including: a housing including a viewport; a display panel for emitting display light, the display panel including a display surface having a planar shape positioned in the housing and arranged to face the viewport; and an optical system positioned in the housing and configured to form an image of the display light, in which the optical system includes a first semi-transmissive mirror having a function of reflecting light toward the display panel and diffusing, concentrating, or converging the light, and a second semi-transmissive mirror positioned between the display panel and the first semi-transmissive mirror, and having a function of reflecting light toward the first semi-transmissive mirror and concentrating or converging the light.

FIG. 36

# EP 4 787 056 A1

**Description**

TECHNICAL FIELD

The present disclosure relates to a display device, a mobile body, and a display panel housing device.

BACKGROUND OF INVENTION

A display device described in, for example, Patent Document 1 is known.

CITATION LIST

PATENT LITERATURE

Patent Document 1: JP 2022-63533A

SUMMARY

A display device of the present disclosure is a display device not mounted on a user, the display device including:

a housing including a viewport;
a display panel for emitting display light, the display panel including a display surface having a planar shape positioned in the housing and arranged to face the viewport; and
an optical system positioned in the housing and configured to form an image of the display light,
in which the optical system includes
a first semi-transmissive mirror having a function of reflecting light toward the display panel and diffusing, concentrating, or converging the light, and
a second semi-transmissive mirror positioned between the display panel and the first semi-transmissive mirror, and having a function of reflecting light toward the first semi-transmissive mirror and concentrating or converging the light.

A mobile body of the present disclosure includes the display device.

A display panel housing device of the present disclosure is a display panel housing device not mounted on a user, the display panel housing device including:

a housing including a display panel installation portion on which a display panel having a display surface is installable, and a viewport arranged to face the display surface; and
an optical system positioned in the housing and configured to form a planar image of display light emitted from the display surface,
in which the optical system includes
a first semi-transmissive mirror having a function of reflecting light toward the display panel installation portion and diffusing, concentrating, or converging the light, and
a second semi-transmissive mirror positioned between the display panel installation portion and the first semi-transmissive mirror, and having a function of reflecting light toward the first semi-transmissive mirror and concentrating or converging the light.

A display device of the present disclosure is a display device including:

a second housing that is installable in a first housing including a first viewport and includes a second viewport;
a display panel configured to emit display light, the display panel including a display surface having a planar shape positioned in the second housing and arranged to face the first viewport and the second viewport and
an optical system positioned in the second housing and configured to form an image of the display light,
in which the optical system includes
a first semi-transmissive mirror having a function of reflecting light toward the display panel and diffusing, concentrating, or converging the light, and
a second semi-transmissive mirror positioned between the display panel and the first semi-transmissive mirror, and having a function of reflecting light toward the first semi-transmissive mirror and concentrating or converging the light.

A display device of the present disclosure is a display device including:

a first housing including a first viewport;
a second housing installed in the first housing and including a second viewport;
a display panel configured to emit display light, the display panel including a display surface having a planar shape positioned in the second housing and arranged to face the first viewport and the second viewport and
an optical system positioned in the second housing and configured to form an image of the display light, in which the optical system includes
a first semi-transmissive mirror having a function of reflecting light toward the display panel and diffusing, concentrating, or converging the light, and
a second semi-transmissive mirror positioned between the display panel and the first semi-transmissive mirror, and having a function of reflecting light toward the first semi-transmissive mirror and concentrating or converging the light.

BRIEF DESCRIPTION OF THE DRAWINGS

The objects, features, and advantages of the present disclosure will become more apparent from the following detailed description and drawings.

FIG. 1 is a view schematically illustrating a configuration of a display device of the present disclosure.

FIG. 2 is a cross-sectional view illustrating an example of a main configuration of a display device according to one embodiment of the present disclosure.

FIG. 3 is a cross-sectional view illustrating another example of the main configuration of the display device according to one embodiment of the present disclosure.

FIG. 4 is a cross-sectional view illustrating an example of a main configuration of a display device according to another embodiment of the present disclosure.

FIG. 5 is a cross-sectional view illustrating another example of the main configuration of the display device according to the other embodiment of the present disclosure.

FIG. 6 is a view describing projection of a virtual image in the display device of FIG. 4.

FIG. 7 is a view describing projection of a virtual image in the display device of FIG. 5.

FIG. 8 is a view describing design of an optical system in the display device of FIG. 5.

FIG. 9 is a cross-sectional view illustrating an example of a main configuration of a display device according to yet another embodiment of the present disclosure.

FIG. 10 is a view illustrating an example of a configuration of an image-forming device according to one embodiment of the present disclosure.

FIG. 11 is a view illustrating another example of the configuration of the image-forming device according to one embodiment of the present disclosure.

FIG. 12 is a view illustrating another example of the configuration of the image-forming device according to one embodiment of the present disclosure.

FIG. 13 is a cross-sectional view describing another example of the display device.

FIG. 14 is a cross-sectional view describing another example of the display device.

FIG. 15A is a view describing an optical system in another example of the display device.

FIG. 15B is a view describing an optical system in another example of the display device.

FIG. 15C is a view describing an optical system in another example of the display device.

FIG. 15D is a view describing an optical system in another example of the display device.

FIG. 16A is a view describing an optical system in another example of the display device.

FIG. 16B is a view describing an optical system in another example of the display device.

FIG. 16C is a view describing an optical system in another example of the display device.

FIG. 16D is a view describing an optical system in another example of the display device.

FIG. 17 is a graph showing an optical system in another example of the display device.

FIG. 18 is a cross-sectional view describing another example of the display device.

FIG. 19 is a cross-sectional view describing another example of the display device.

FIG. 20 is a cross-sectional view describing another example of the display device.

FIG. 21 is a cross-sectional view illustrating an example of a configuration of a second semi-transmissive mirror.

FIG. 22 is a cross-sectional view describing another example of the display device.

FIG. 23 is a cross-sectional view illustrating another example of a main configuration of the display device according to one embodiment of the present disclosure.

FIG. 24 is a cross-sectional view illustrating another example of the main configuration of the display device according to another embodiment of the present disclosure.

FIG. 25 is a cross-sectional view illustrating another example of the main configuration of the display device according to yet another embodiment of the present disclosure.

FIG. 26 is a perspective view illustrating a cross section of another example of the display device according to one embodiment of the present disclosure.

FIG. 27 is a cross-sectional view illustrating another example of the display device according to one embodiment of the present disclosure.

FIG. 28 is a view illustrating an optical path of display light in the display device of FIG. 2.

FIG. 29 is a cross-sectional view illustrating an example of a main configuration of a display device according to an embodiment of the present disclosure.

FIG. 30 is a cross-sectional view illustrating an example of a main configuration of a display device according to an embodiment of the present disclosure.

FIG. 31 is a cross-sectional view illustrating an example of a main configuration of a display device according to an embodiment of the present disclosure.

FIG. 32 is a cross-sectional view illustrating an example of a main configuration of a display device according to an embodiment of the present disclosure.

FIG. 33A is a view describing an optical function of the display device according to each of FIGs. 29 to 32.

FIG. 33B is a view describing the optical function of the display device according to each of FIGs. 29 to 32.

FIG. 34 shows an example of various dimensions of the display device illustrated in FIG. 27.

FIG. 35 illustrates a first example in which a first semi-transmissive mirror forms an image of display light to form a first image.

FIG. 36 illustrates a first example in which a second semi-transmissive mirror forms an image of the first image to form a second image in FIG. 35.

FIG. 37 illustrates a second example in which the second semi-transmissive mirror forms an image of the first image to form the second image in FIG. 35.

FIG. 38 illustrates a second example in which the first semi-transmissive mirror forms an image of display light to form a first image.

FIG. 39 illustrates a first example in which a second semi-transmissive mirror forms an image of the first image to form a second image in FIG. 38.

FIG. 40 illustrates a second example in which the second semi-transmissive mirror forms an image of the first image to form the second image in FIG. 38.

FIG. 41 illustrates a third example in which the first semi-transmissive mirror forms an image of display light to form a first image.

FIG. 42 illustrates a first example in which a second semi-transmissive mirror forms an image of the first image to form a second image in FIG. 41.

FIG. 43 illustrates a second example in which the second semi-transmissive mirror forms an image of the first image to form the second image in FIG. 41.

FIG. 44 illustrates a third example in which the second semi-transmissive mirror forms an image of the first image to form the second image in FIG. 41.

FIG. 45 is a view describing a condition according to the example of FIG. 43 and a condition according to the example of FIG. 44.

FIG. 46 illustrates a first arrangement example of a retardation member.

FIG. 47 illustrates a second arrangement example of the retardation member.

FIG. 48 illustrates a third arrangement example of the retardation member.

FIG. 49 illustrates an arrangement example of a third retardation plate and a fourth retardation plate.

DESCRIPTION OF EMBODIMENTS

Various types of known small-sized display devices have been proposed, the display devices being used for a digital rear-view mirror to be arranged in a cabin of a vehicle, a head-mounted display to be mounted on a user's head, or the like. The display device described in Patent Document 1 emits, via a plurality of optical members such as a retardation plate and a reflective polarizing plate, the display light emitted from a display panel.
A known display device is liable to have deformation of an optical member, position shift of optical members, and the like, and display quality may deteriorate.
An embodiment of the present disclosure will be described below with reference to the drawings. Some of the drawings used in the following description are schematic. The drawings used in the following description illustrate main components of a display device and a virtual image display device of the present disclosure. The display device and the virtual image display device of the present disclosure may include well-known components not illustrated such as a holding member of an optical system and a housing. In the present description, an orthogonal coordinate system XYZ is defined for convenience in some of the drawings. An X axis direction is also referred to as a left-right direction. A Y axis direction is also referred to as a height direction or an up-down direction. A Z axis direction is also referred to as an emission direction or a depth direction. In the present disclosure, the Y axis direction may be a direction along the up-down direction of a video of a virtual image V, and the X axis direction may be a direction along the left-right direction of the video of the virtual image V.

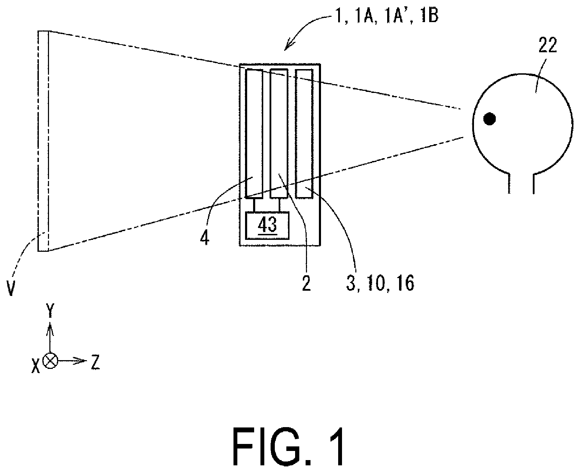

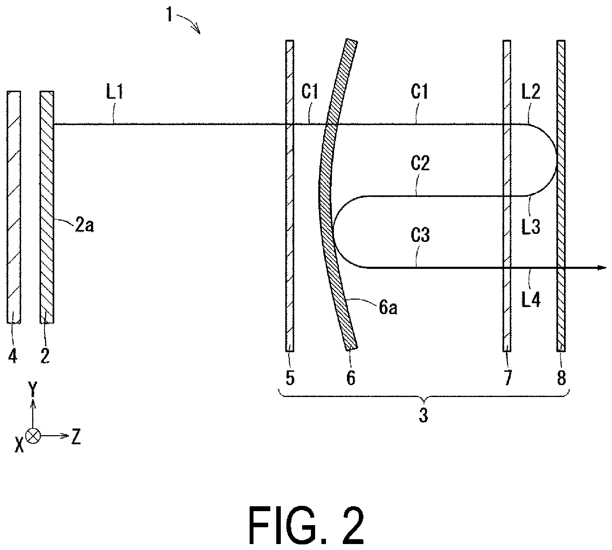

FIGs. 1 to 28 are views or graphs describing the display device, an image-forming device, a display system, and a vehicle of the present disclosure. In FIGs. 2 to 5, 9, 13, 14, 18 to 20, and 22 to 25, for ease of illustration, the optical path of light incident on an optical member having light reflectivity and the optical path of light reflected by the optical member are shifted in the height direction (Y axis direction).

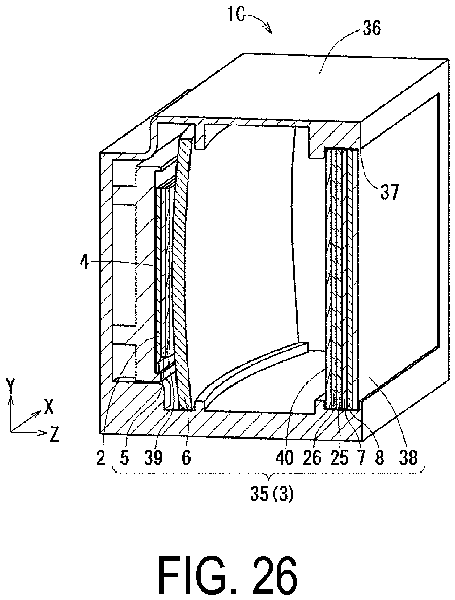

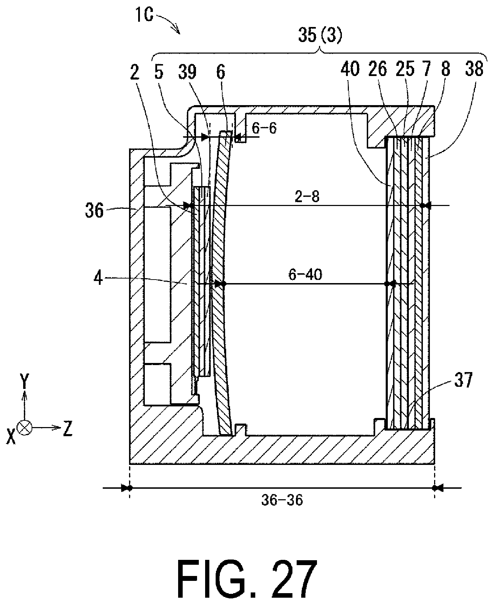

As illustrated in FIG. 1, a display device 1 according to one embodiment of the present disclosure includes a display panel 2 and an optical system 3. The display device 1 causes a part of the display light emitted from the display panel 2 to be incident on an eye of a user 22, and causes the user 22 to visually recognize it as a formed image, an image, or an aerial image. The display device 1 enables the user 22 to visually recognize, as display of the display panel 2, the display light emitted from the display panel 2 at a position different from the position of the display panel 2. In a position embodiment of the present disclosure, the display device 1 causes the user 22 to visually recognize the virtual image V. The virtual image V may be formed on a farther side of the display device 1 as viewed from the user 22. The virtual image V may be an erect virtual image in which a display image displayed on the display panel 2 is enlarged. When the display device 1 includes a housing (see FIGs. 26 and 27) that houses the display panel 2 and the optical system 3, the virtual image V may be formed inside the housing or may be formed outside the housing. The virtual image V may be formed on a side farther than the display panel 2 or may be formed on a side closer than the display panel 2 as viewed from the user 22. When the housing includes a window 37 (see FIGs. 26 and 27) that transmits the display light emitted from the optical system 3, the virtual image V may be formed on a side farther than the window 37 (light-transmissive plate 38) or on a side closer to the window as viewed from the user 22.

In one embodiment of the present disclosure, the display device 1 may be a device not mounted on the user 22. That is, it may be used by being fixed to the environment, rather than being mounted on the user 22. The display device 1 is fixed to, for example, a wall, a pillar, a ceiling, or the like. The display device 1 may be fixed to an interior of a vehicle. The present disclosure may be mounted on the user 22. The display device 1 may include a mount (not illustrated) that fixes the window 37 to the position of the eye of the user 22 when mounted on the user 22.

The display device 1 may be configured to cause a part of the display light emitted from the display panel 2 to be incident on the eye of the user 22 and cause the user 22 to visually recognize it as a real image. The real image may be formed on a side closer than the display device 1 as viewed from the user 22. When the display device 1 includes a housing 36 (see FIGs. 26 and 27) that houses the display panel 2 and the optical system 3, the real image may be formed inside the housing 36 or may be formed outside the housing 36. The real image may be formed on a side farther than the display panel 2 or may be formed on a side closer than the display panel 2 as viewed from the user 22. When the housing 36 includes the window 37 (see FIGs. 26 and 27) that transmits the display light emitted from the optical system 3, the real image may be formed on a side farther than the window 37 (light-transmissive plate 38) or on a side closer to the window 37 (light-transmissive plate 38) as viewed from the user 22.

The display panel 2 includes a display surface 2a and displays a display image on the display surface 2a. In other words, the display panel 2 emits the display light of the display image from the display surface 2a. The display panel 2 may be configured to emit display light of linearly polarized light. A case where the display panel 2 emits display light of S-polarized light will be described, but no such limitation is intended. For example, when the display panel 2 emits display light of P-polarized light, the S-polarized light in the following description may be read as P-polarized light, and the P-polarized light may be read as S-polarized light.

The display panel 2 may be a liquid-crystal panel. The liquid-crystal panel may have a configuration of a known liquid-crystal panel. The known liquid-crystal panel may be, for example, a liquid-crystal panel of an in-plane switching (IPS) method, a fringe field switching (FFS) method, a vertical alignment (VA) method, an electrically controlled birefringence (ECB) method, or the like.

The display device 1 may include an irradiator 4 that irradiates the display panel 2 in a planar manner. The irradiator 4 is also referred to as a backlight. The irradiator 4 may be a backlight of an edge-lit backlight or a direct backlight. The edge-light backlight includes one or more light sources arranged in an outer periphery of the display panel 2, and guides light emitted from the light sources to the entire back surface of the display panel 2 by a light-guide plate to uniformly disperse the light. The direct backlight includes a plurality of light sources arrayed on the back side of the display panel 2, and irradiates the display panel 2 with light emitted from the plurality of light sources. The light source of the irradiator 4 may be a cold cathode fluorescent lamp, a halogen lamp, a xenon lamp, or the like, or may be a light emitting diode (LED), an organic light emitting diode (OLED), a semiconductor laser diode (LD), or the like. When the light source of the irradiator 4 is an LD having excellent monochromaticity, the design of the optical system 3, particularly, the design of an optical member having optical characteristics dependent on wavelength is facilitated.

The display panel 2 is not limited to a liquid-crystal panel (transmissive display panel). The display panel 2 may be a display panel of a self-emitting type including a self-emitting element such as a light emitting diode (LED), an organic light emitting diode (OLED), or a semiconductor laser diode (LD).

The optical system 3 projects, as the virtual image V, the display light emitted from the display panel 2 within a field of view of the user 22. As illustrated in FIG. 2, the optical system 3 may include a first retardation plate 5, a semi-transmissive mirror 6, a second retardation plate 7, and a reflective polarizing plate 8. The first retardation plate 5, the semi-transmissive mirror 6, the second retardation plate 7, and the reflective polarizing plate 8 are arranged in this order in an emission direction of the display light from the display panel 2 (positive direction of the Z axis direction).

The first retardation plate 5 may face the display surface 2a of the display panel 2, or may be positioned apart from the display panel 2. The first retardation plate 5 may be positioned apart from the display surface 2a in the emission direction of the display light from the display panel 2. The second retardation plate 7 may be positioned apart from the first retardation plate 5 in the emission direction of the display light from the display panel 2. The first retardation plate 5 and the second retardation plate 7 may be quarter-wavelength plates. The first retardation plate 5 and the second retardation plate 7 provide a phase difference of a quarter wavelength to a polarization plane of incident light (polarization plane in an electric field oscillation direction). This enables a part of the display light emitted from the display panel 2 to be reflected by the reflective polarizing plate 8 and to be incident on the semi-transmissive mirror 6. The positional relationship between the first retardation plate 5 and the second retardation plate 7 may be defined with a slow axis of the second retardation plate 7 being orthogonal to a slow axis of the first retardation plate 5 when the first retardation plate 5 and the second retardation plate 7 are visually recognized along the Z axis direction. The positional relationship between the first retardation plate 5 and the second retardation plate 7 may also be defined with the slow axis of the second retardation plate 7 and the slow axis of the first retardation plate 5 being parallel when the first retardation plate 5 and the second retardation plate 7 are visually recognized along the Z axis direction.

The first retardation plate 5 and the second retardation plate 7 may be provided with a phase difference necessary to light transmitted through the first retardation plate 5 and the second retardation plate 7, allowing the light transmitted through the first retardation plate 5 and the second retardation plate 7 to be reflected by the reflective polarizing plate 8. That is, for example, when the polarized light obtained by being transmitted through the first retardation plate 5 and the second retardation plate 7 is defined as second polarized light, the first retardation plate 5 and the second retardation plate 7 may be other wavelength plates or combinations thereof rather than quarter-wavelength plates as long as the second polarized light is obtained. In the present disclosure, a case where the first retardation plate 5 and the second retardation plate 7 are quarter-wavelength plates will be described as an example. The first retardation plate 5 and the second retardation plate 7 may be film-shaped members.

The second retardation plate 7 may be provided with a phase difference necessary to light transmitted through the second retardation plate 7, allowing the light reflected by the reflective polarizing plate 8 and transmitted through the second retardation plate 7 to be transmitted through the reflective polarizing plate 8 when the light reaches the reflective polarizing plate 8 again. That is, for example, when the polarized light obtained by being reflected by the reflective polarizing plate 8 and transmitted through the second retardation plate 7 is defined as first polarized light, the second retardation plate 7 may be another wavelength plate rather than a quarter-wavelength plate as long as the first polarized light is obtained.

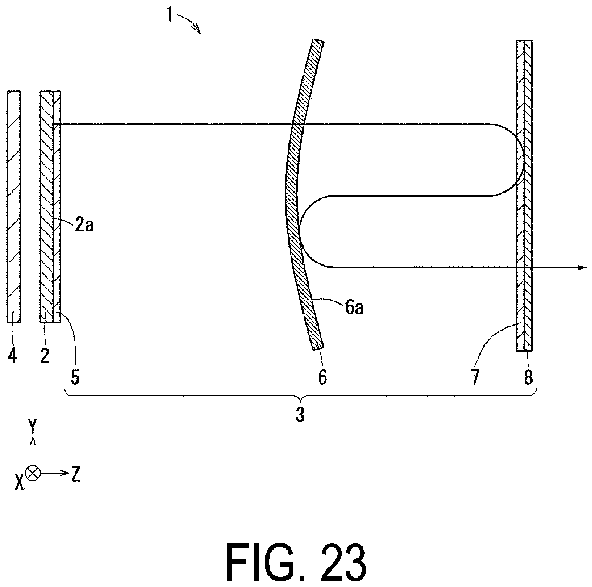

As illustrated in FIG. 23, the first retardation plate 5 may be integrated with the display panel 2. The term "integrated" may mean that two members are arranged in contact with each other, or may mean that two members are joined to each other by an optically transparent adhesive such as an optical clear resin (OCR) or an optically clear adhesive (OCA). However, the first retardation plate 5 may be positioned apart from the display surface 2a in the emission direction of the display light from the display panel 2.

The semi-transmissive mirror 6 may be positioned between the first retardation plate 5 and the second retardation plate 7. The semi-transmissive mirror 6 may transmit a part (e.g., approximately 50%) of the incident light and reflect the remaining part (e.g., approximately 50%). The transmittance and the reflectance of light incident on the semi-transmissive mirror 6 are not limited to 50%. The semi-transmissive mirror 6 reflects a part of the display light reflected by the reflective polarizing plate 8 and causes it to be incident on the eye of the user 22. This enables the user 22 to visually recognize the virtual image V. The semi-transmissive mirror 6 may have a function of concentrating or converging light. Specifically, the semi-transmissive mirror 6 may have a function of concentrating or converging the light incident on and reflected by the semi-transmissive mirror 6. In the present embodiment, the semi-transmissive mirror 6 can concentrate or converge light more effectively than other members of the optical system 3. In other words, the semi-transmissive mirror 6 is set to have a larger concentration, convergence, index represented by the reciprocal of the focal length, or the like than that of other members of the optical system 3, for example.

In the present embodiment, the optical system 3 may include only the semi-transmissive mirror 6 as a member having a concentration or convergence function. The semi-transmissive mirror 6 may be a concave mirror including a reflective surface 6a having a concave shape as illustrated in FIG. 2. The semi-transmissive mirror 6 is positioned on the second retardation plate 7 side, and more specifically, the reflective surface 6a of the semi-transmissive mirror 6 may be positioned on the second retardation plate 7 side. In the present embodiment, by including the reflective surface 6a having a concave shape, the semi-transmissive mirror 6 can concentrate or converge light. The reflective surface 6a of the semi-transmissive mirror 6 has a curvature larger than that of other members of the optical system 3. The semi-transmissive mirror 6 may include a spherical shape, an aspherical shape, or a free-form surface shape in at least a part of the reflective surface 6a. The transmittance of the semi-transmissive mirror 6 is not limited to 50%. The semi-transmissive mirror 6 may include a holographic optical element (HOE), or may have a surface shape having a Fresnel shape.

The semi-transmissive mirror 6 includes, for example, a base member and a semi-transmissive reflective layer positioned on a surface of the base member. The base member may have a transmittance of 100% or close to 100% for light in the visible light band. The base member may be made of, for example, a resin material, a glass material, or the like. The resin material may be, for example, an acrylic resin, a polycarbonate resin, or the like. The semi-transmissive reflective layer may be a thin metal film. The thin metal film may be made of a metal material such as aluminum or chromium. The semi-transmissive reflective layer is not limited to a thin metal film, and may be, for example, a dielectric multilayer film or the like. The semi-transmissive mirror 6 may reflect light by the semi-transmissive reflective layer. The semi-transmissive reflective layer may be formed on a surface on the second retardation plate 7 side in the base member.

The reflective polarizing plate 8 may be positioned on the opposite side to the first retardation plate 5 relative to the second retardation plate 7. In other words, the reflective polarizing plate 8 may be positioned downstream of the second retardation plate 7 in the emission direction of the display light from the display panel 2. The reflective polarizing plate 8 may transmit a part of the incident light and reflect the remaining part. In the present embodiment, the reflective polarizing plate 8 may reflect polarized light (P-polarized light, also called second polarized light) having a polarization axis perpendicular to the polarization axis of display light and transmit polarized light (S-polarized light, also called first polarized light) having a polarization axis parallel to the polarization axis of the display light. In this case, the positional relationship between the first retardation plate 5 and the second retardation plate 7 may be defined with the slow axis of the second retardation plate 7 and the slow axis of the first retardation plate 5 being parallel when the first retardation plate 5 and the second retardation plate 7 are visually recognized along the Z axis direction. The reflective polarizing plate 8 may transmit polarized light having a polarization axis perpendicular to the polarization axis of the display light and reflect polarized light having a polarization axis parallel to the polarization axis of the display light. In this case, the positional relationship between the first retardation plate 5 and the second retardation plate 7 may be defined with the slow axis of the second retardation plate 7 being orthogonal to the slow axis of the first retardation plate 5 when the first retardation plate 5 and the second retardation plate 7 are visually recognized along the Z axis direction. This enables the user 22 to visually recognize the virtual image V. As illustrated in FIG. 23, the reflective polarizing plate 8 may be integrated with the second retardation plate 7. The reflective polarizing plate 8 may have a flat plate shape, a concave shape positioned on the display panel 2 side, or a convex shape positioned on the display panel 2 side. The reflective polarizing plate 8 may include a holographic optical element (HOE), or may have a surface shape having a Fresnel shape.

The reflective polarizing plate 8 may be, for example, a wire grid polarizer including a base member and a plurality of thin metal wires (also called metal nanowire grids) positioned on the surface of the base member. The base member may have a transmittance of 100% or close to 100% for light in the visible light band. The base member may be made of, for example, a resin material, a glass material, or the like. The thin metal wire may be made of a metal material such as aluminum, chromium, or titanium oxide. The thin metal wire may be arranged along one direction. The reflective polarizing plate 8 can transmit a light component oscillating in a direction orthogonal to the grid and can reflect a light component oscillating in a direction parallel to the grid.

An optical function of the optical system 3 will be described. The display panel 2 emits the display light of first linearly polarized light L1. The display light of the first linearly polarized light L1 emitted from the display panel 2 is transmitted through the first retardation plate 5 and converted into light of first circularly polarized light C1. A part (e.g., approximately 50%) of the first circularly polarized light C1 transmitted through the first retardation plate 5 is transmitted through the semi-transmissive mirror 6. The first circularly polarized light C1 transmitted through the semi-transmissive mirror 6 is transmitted through the second retardation plate 7 and converted into light of second linearly polarized light L2 having a polarization direction parallel to that of the first linearly polarized light L1. The light of the second linearly polarized light L2 is incident on the reflective polarizing plate 8. The light of the second linearly polarized light L2 incident on the reflective polarizing plate 8 is reflected by the reflective polarizing plate 8 and converted into light of third linearly polarized light L3. The light of the third linearly polarized light L3 is transmitted through the second retardation plate 7 and converted into light of second circularly polarized light C2. A part (e.g., approximately 50%) of the light of the second circularly polarized light C2 transmitted through the second retardation plate 7 is reflected by the semi-transmissive mirror 6 and converted into light of third circularly polarized light C3. The light of the third circularly polarized light C3 is transmitted through the second retardation plate 7 and converted into light of fourth linearly polarized light L4 having a polarization direction orthogonal to that of the first linearly polarized light L1. The light of the fourth linearly polarized light L4 is transmitted through the reflective polarizing plate 8 and emitted to the outside. The amount (brightness) of light emitted from the display device 1 becomes, for example, approximately 25% of the amount (brightness) of display light emitted from the display panel 2.

In one embodiment of the present disclosure, the first linearly polarized light L1 to the third linearly polarized light L3 described above may be S-polarized light, and the fourth linearly polarized light L4 may be P-polarized light.

Another optical function of the optical system 3 will be described. The display panel 2 emits the display light of S-polarized light (first linearly polarized light L1). The display light of the first linearly polarized light L1 emitted from the display panel 2 is transmitted through the first retardation plate 5 and converted into light of the first circularly polarized light C1. A part (e.g., approximately 50%) of the first circularly polarized light C1 transmitted through the first retardation plate 5 is transmitted through the semi-transmissive mirror 6. The first circularly polarized light C1 transmitted through the semi-transmissive mirror 6 is transmitted through the second retardation plate 7 and converted into light (i.e., P-polarized light) of the second linearly polarized light L2 having a polarization direction orthogonal to that of the first linearly polarized light L1. The light of the second linearly polarized light L2 is incident on the reflective polarizing plate 8. As described above, the reflective polarizing plate 8 may reflect the P-polarized light and transmit the S-polarized light. The light of the second linearly polarized light L2 incident on the reflective polarizing plate 8 is reflected by the reflective polarizing plate 8 and converted into light of the third linearly polarized light L3. The light of the third linearly polarized light L3 is transmitted through the second retardation plate 7 and converted into light of the second circularly polarized light C2. A part (e.g., approximately 50%) of the light of the second circularly polarized light C2 transmitted through the second retardation plate 7 is reflected by the semi-transmissive mirror 6 and converted into light of the third circularly polarized light C3. The light of the third circularly polarized light C3 is transmitted through the second retardation plate 7 and converted into light (i.e., S-polarized light) of the fourth linearly polarized light L4 having a polarization direction parallel to that of the first linearly polarized light L1. The light of the fourth linearly polarized light L4 is transmitted through the reflective polarizing plate 8 and emitted to the outside. The amount (brightness) of light emitted from the display device 1 becomes, for example, approximately 25% of the amount (brightness) of display light emitted from the display panel 2.

Since the optical system 3 is a uniaxial (on-axis) optical system in which the optical axis of incident light and the optical axis of emitted light substantially coincide with each other, the space occupied by the optical system 3 can be reduced, and as a result, the display device 1 can be reduced in size. Since the optical system 3 is uniaxial, distortion, brightness unevenness, and the like of the virtual image V visually recognized by the user 22 can be reduced, and the design of the optical system 3 is facilitated.

In the display device 1, the optical path length of light emitted from the display panel 2, transmitted through the semi-transmissive mirror 6, reflected by the reflective polarizing plate 8, and reaching the semi-transmissive mirror 6 may be shorter than the focal length of the semi-transmissive mirror 6. In this case, the users 22 can be caused to visually recognize the virtual image V. In the display device 1, the optical path length of light emitted from the display panel 2, transmitted through the semi-transmissive mirror 6, reflected by the reflective polarizing plate 8, and reaching the semi-transmissive mirror 6 may be longer than the focal length of the semi-transmissive mirror 6. In this case, the users 22 can be caused to visually recognize a real image.

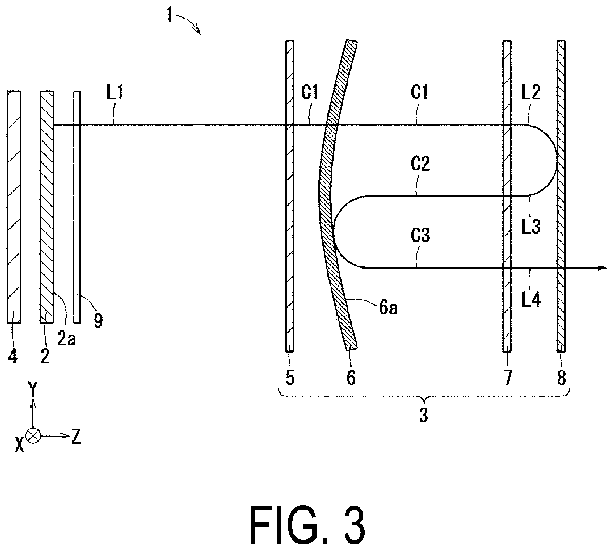

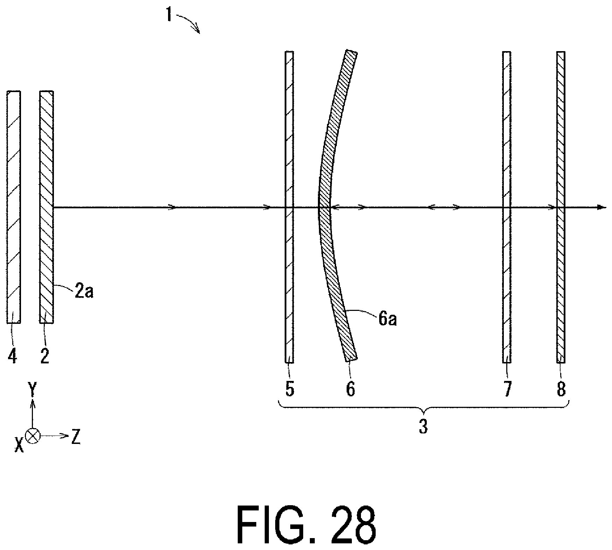

In FIG. 2, for ease of illustration, the optical path of light incident on the reflective polarizing plate 8 and the optical path of light reflected by the reflective polarizing plate 8 are shifted in the height direction (Y axis direction), and the optical path of light incident on the semi-transmissive mirror 6 and the optical path of light reflected by the semi-transmissive mirror 6 are shifted in the height direction (Y axis direction), but, in practice, the display light emitted from the display panel 2 propagates substantially along a single axis as illustrated in FIG. 28. The same applies to the optical paths illustrated in FIGs. 3 to 5, 9, 13, 14, 18 to 20, and 22 to 25.

A display device according to another embodiment of the present disclosure will be described. In the present embodiment, the display device differs from the display device of the above embodiment in the configuration of the optical system, but otherwise has the same configuration, and therefore the same components are given the same reference signs and detailed description will be omitted.

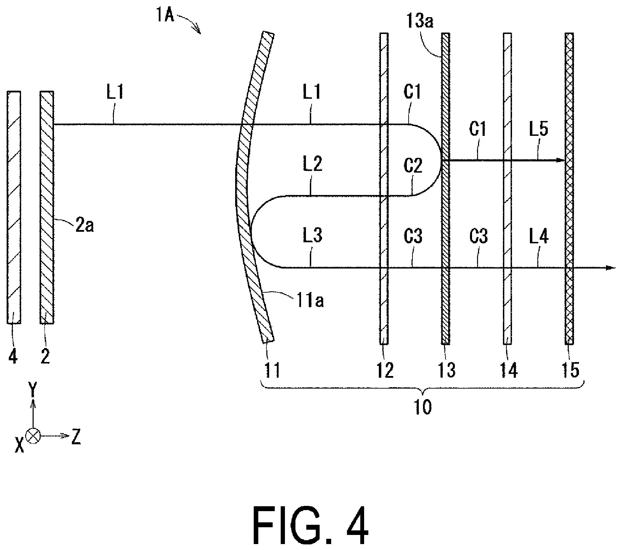

In the present embodiment, a display device 1A includes the display panel 2 and an optical system 10 as illustrated in FIG. 4. The display panel 2 includes the display surface 2a and displays a display image on the display surface 2a. The optical system 10 projects, as the virtual image V, the display light emitted from the display panel 2 within the field of view of the user 22.

The optical system 10 includes a first semi-transmissive mirror 11, a first retardation plate 12, a second semi-transmissive mirror 13, a second retardation plate 14, and a polarizing plate 15. That is, the optical system 10 includes a pair of semi-transmissive mirrors (the first semi-transmissive mirror 11 and the second semi-transmissive mirror 13). The first semi-transmissive mirror 11, the first retardation plate 12, the second semi-transmissive mirror 13, the second retardation plate 14, and the polarizing plate 15 are arranged in this order in the emission direction of the display light from the display panel 2.

The first semi-transmissive mirror 11 includes a reflective surface 11a that reflects light. The first retardation plate 12 may be positioned on the opposite side to the display panel 2 relative to the first semi-transmissive mirror 11, and more specifically, may be positioned on the reflective surface 11a side of the first semi-transmissive mirror 11. The first retardation plate 12 may be positioned apart from the display surface 2a in the emission direction of the display light from the display panel 2. The second retardation plate 14 may be positioned apart from the first retardation plate 12 in the emission direction of display light. The first semi-transmissive mirror 11 may have a function of concentrating or converging light. Specifically, the first semi-transmissive mirror 11 may have a function of concentrating or converging the light incident on and reflected by the reflective surface 11a of the first semi-transmissive mirror 11. In the present embodiment, the first semi-transmissive mirror 11 has a larger concentration, convergence, index represented by the reciprocal of the focal length, or the like than that of other members of the optical system 10, for example. The first retardation plate 12 and the second retardation plate 14 may be quarter-wavelength plates. The positional relationship between the first retardation plate 12 and the second retardation plate 14 may be defined with the slow axis of the second retardation plate 14 being

EP 4 787 056 A1

orthogonal to the slow axis of the first retardation plate 12 when the first retardation plate 12 and the second retardation plate 14 are visually recognized along the Z axis direction. The positional relationship between the first retardation plate 12 and the second retardation plate 14 may be defined with the slow axis of the second retardation plate 14 and the slow axis of the first retardation plate 12 being parallel when the first retardation plate 12 and the second retardation plate 14 are visually recognized along the Z axis direction.

The first semi-transmissive mirror 11 is positioned between the display panel 2 and the first retardation plate 12. The first semi-transmissive mirror 11 may transmit a part of the incident light and reflect the remaining part. The first semi-transmissive mirror 11 is a concave mirror including the reflective surface 11a having a concave shape positioned on the first retardation plate 12 side as illustrated in FIG. 4. In the present embodiment, the first semi-transmissive mirror 11 may transmit polarized light having a polarization axis parallel to the polarization axis of the display light and reflect polarized light having a polarization axis perpendicular to the polarization axis of the display light. The first semi-transmissive mirror 11 may transmit light of S-polarized light and reflect light of P-polarized light. The first semi-transmissive mirror 11 may reflect light of S-polarized light and transmit light of P-polarized light. The first semi-transmissive mirror 11 may include a spherical shape, an aspherical shape, or a free-form surface shape in at least a part of the reflective surface 11a.

The first semi-transmissive mirror 11 may include, for example, a base member and a plurality of thin metal wires (metal nanowire grids) positioned on the surface of the base member. The base member may have a transmittance of 100% or close to 100% for light in the visible light band. The base member may be made of, for example, a resin material, a glass material, or the like. The resin material may be, for example, an acrylic resin, a polycarbonate resin, or the like. The thin metal wire may be made of a metal material such as aluminum, chromium, or titanium oxide. The thin metal wire may be arranged along one direction. The first semi-transmissive mirror 11 can transmit a light component oscillating in a direction orthogonal to the grid and can reflect a light component oscillating in a direction parallel to the grid. The metal nanowire grid may be formed on a surface on the first retardation plate 12 side in the base member. In the present example, the metal nanowire grid imparts a function of reflective polarization to the first semi-transmissive mirror 11, but the first semi-transmissive mirror 11 may be a simple half mirror and a reflective polarizing plate may be separately provided.

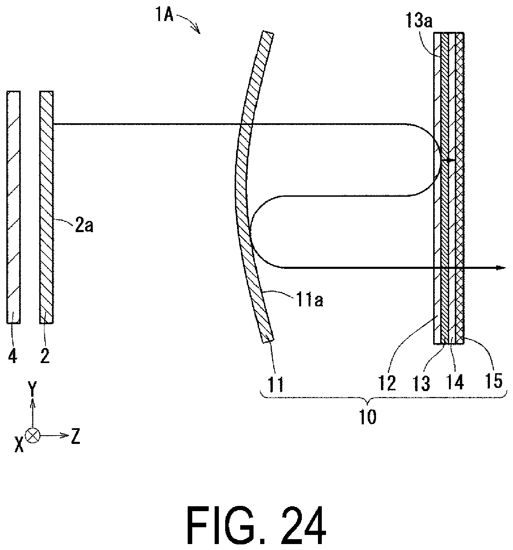

The second semi-transmissive mirror 13 is positioned between the first retardation plate 12 and the second retardation plate 14. The second semi-transmissive mirror 13 may transmit a part (e.g., approximately 50%) of the incident light and reflect the remaining part (e.g., approximately 50%). The transmittance and the reflectance of light incident on the second semi-transmissive mirror 13 are not limited to 50%. The second semi-transmissive mirror 13 includes a reflective surface 13a. The second semi-transmissive mirror 13 may be positioned on the opposite side to the first semi-transmissive mirror 11 relative to the first retardation plate 12, and more specifically, as illustrated in FIG. 4, the reflective surface 13a may be positioned on the first retardation plate 12 side. The second semi-transmissive mirror 13 may be a plane mirror. The second semi-transmissive mirror 13 is also referred to as a planar half mirror. As illustrated in FIG. 24, the second semi-transmissive mirror 13 may be integrated with the first retardation plate 12 and/or the second retardation plate 14.

The second semi-transmissive mirror 13 may include, for example, a base member and a semi-transmissive reflective layer positioned on a surface of the base member. The base member may have a transmittance of 100% or close to 100% for light in the visible light band. The base member may be made of, for example, inorganic glass, a resin material, or the like. The resin material may be, for example, an acrylic resin, a polycarbonate resin, or the like. The semi-transmissive reflective layer may be a thin metal film. The thin metal film may be made of a metal material such as aluminum or chromium. The semi-transmissive reflective layer is not limited to a thin metal film, and may be, for example, a dielectric multilayer film or the like.

The polarizing plate 15 may be positioned on the opposite side to the second semi-transmissive mirror 13 relative to the second retardation plate 14. In other words, the polarizing plate 15 is positioned downstream of the second retardation plate 14 in the emission direction of the display light from the display panel 2. The polarizing plate 15 may transmit a part of the incident light and absorb the remaining part. The polarizing plate 15 may transmit a part of the incident light and reflect the remaining part. In the present embodiment, the polarizing plate 15 may absorb or reflect polarized light (e.g., S-polarized light, also called third polarized light) having a polarization axis parallel to the polarization axis of the display light and transmit polarized light (e.g., P-polarized light, also called fourth polarized light) having a polarization axis perpendicular to the polarization axis of display light. In this case, the positional relationship between the first retardation plate 12 and the second retardation plate 14 may be defined with the slow axis of the second retardation plate 14 being orthogonal to the slow axis of the first retardation plate 12 when the first retardation plate 12 and the second retardation plate 14 are visually recognized along the Z axis direction. Polarizing plate 15 may absorb or reflect polarized light having a polarization axis perpendicular to the polarization axis of the display light, and transmit polarized light having a polarization axis parallel to the polarization axis of the display light. In this case, the positional relationship between the first retardation plate 12 and the second retardation plate 14 may be defined with the slow axis of the second retardation plate 14 and the slow axis of the first retardation plate 12 being parallel when the first retardation plate 12 and the second retardation plate 14 are visually recognized along the Z axis direction. As illustrated in FIG. 24, the polarizing plate 15 may be integrated with the second retardation plate 14.

The polarizing plate 15 may have a configuration of a known absorption type polarizing plate. The known absorption type polarizing plate may be, for example, an iodine-based polarizing plate in which an iodine compound is adsorbed and aligned on a polyvinyl alcohol (PVA) film, a dye-based polarizing plate in which a dichroic organic dye is adsorbed and aligned on a PVA film, or the like. The polarizing plate 15 may have a configuration of a reflective polarizing plate.

An optical function of the optical system 10 will be described. The display light of the S-polarized light (first linearly polarized light L1) emitted from the display panel 2 is transmitted through the first semi-transmissive mirror 11. The display light of the first linearly polarized light L1 is transmitted through the first retardation plate 12 and converted into light of the first circularly polarized light C1. The light of the first circularly polarized light C1 is incident on the second semi-transmissive mirror 13. A part (e.g., approximately 50%) of the light of the first circularly polarized light C1 is reflected by the second semi-transmissive mirror 13 and converted into light of the second circularly polarized light C2. The light of the second circularly polarized light C2 is transmitted through the first retardation plate 12 and converted into light (i.e., P-polarized light) of the second linearly polarized light L2 having a polarization direction orthogonal to that of the first linearly polarized light L1. The light of the second linearly polarized light L2 is reflected by the first semi-transmissive mirror 11 and converted into light of the third linearly polarized light L3 having a polarization direction orthogonal to that of the first linearly polarized light L1. The light of the third linearly polarized light L3 is transmitted through the first retardation plate 12 and converted into light of the third circularly polarized light C3. A part (e.g., approximately 50%) of the light of the third circularly polarized light C3 is transmitted through the second semi-transmissive mirror 13. The light of the third circularly polarized light C3 transmitted through the second semi-transmissive mirror 13 is transmitted through the second retardation plate 14 and converted into light (i.e., P-polarized light) of the fourth linearly polarized light L4 having a polarization direction orthogonal to that of the first linearly polarized light L1. The light of the fourth linearly polarized light L4 is transmitted through the polarizing plate 15 and emitted to the outside.

The remaining part (e.g., approximately 50%) of the light of the first circularly polarized light C1 is transmitted through the second semi-transmissive mirror 13, and then transmitted through the second retardation plate 14, and is converted into light (i.e., S-polarized light) of fifth linearly polarized light L5 having a polarization direction parallel to that of the first linearly polarized light L1. The light of the fifth linearly polarized light L5 is not emitted to the outside because it is absorbed or reflected by the polarizing plate 15. In other words, the light of the fifth linearly polarized light L5 is light with low transmission through the polarizing plate 15. Therefore, the amount (brightness) of light emitted from the display device 1A becomes, for example, approximately 25% of the amount (brightness) of display light emitted from the display panel 2.

Although an example in which the first retardation plate 12 and the second retardation plate 14 are quarter-wavelength plates is described above, the first retardation plate 12 and the second retardation plate 14 may be other wavelength plates or combinations thereof rather than quarter-wavelength plates as long as a part of light is absorbed by the polarizing plate 15 and the other part of light is transmitted through the polarizing plate 15. For example, the first retardation plate 12 and the second retardation plate 14 may be provided with a phase difference necessary to light not reflected by the second semi-transmissive mirror 13 and transmitted through the first retardation plate 12 and the second retardation plate 14, allowing a part of the light not reflected by the second semi-transmissive mirror 13 and transmitted through the first retardation plate 12 and the second retardation plate 14 to be absorbed or reflected by the polarizing plate 15. That is, for example, when the polarized light obtained by not reflected by the second semi-transmissive mirror 13 but transmitted through the first retardation plate 12 and the second retardation plate 14 is defined as third polarized light, the first retardation plate 12 and the second retardation plate 14 may be other wavelength plates or combinations thereof rather than quarter-wavelength plates as long as the third polarized light is obtained. In the present disclosure, a case where the first retardation plate 12 and the second retardation plate 14 are quarter-wavelength plates will be described as an example. The first retardation plate 12 and the second retardation plate 14 may be provided with a phase difference necessary to light reflected by the second semi-transmissive mirror 13 and the first semi-transmissive mirror 11 and transmitted through the first retardation plate 12 and the second retardation plate 14, allowing the light reflected by the second semi-transmissive mirror 13 and the first semi-transmissive mirror 11 and transmitted through the first retardation plate 12 and the second retardation plate 14 to be transmitted through the polarizing plate 15. That is, for example, when the polarized light obtained by being reflected by the second semi-transmissive mirror 13 and the first semi-transmissive mirror 11 and transmitted through the first retardation plate 12 and the second retardation plate 14 is defined as fourth polarized light, the first retardation plate 12 and the second retardation plate 14 may be other wavelength plates rather than quarter-wavelength plates as long as the fourth polarized light is obtained. The first retardation plate 12 and the second retardation plate 14 may be other wavelength plates or combinations thereof rather than quarter-wavelength plates as long as a part of light is reflected by the first semi-transmissive mirror 11 and the other part of light is transmitted through the first semi-transmissive mirror 11. The first retardation plate 12 may be provided with a phase difference necessary to light transmitted through the first retardation plate 12, allowing the light transmitted through the first retardation plate 12, reflected by the second semi-transmissive mirror 13, and transmitted through the first retardation plate 12 again to be reflected by the first semi-transmissive mirror 11. That is, for example, when the polarized light obtained by being transmitted through the first retardation plate 12, reflected by the second semi-transmissive mirror 13, and transmitted through the first retardation plate 12 again is defined as fifth polarized light, the first retardation plate 12 may be another wavelength plate rather than a quarter-wavelength plate as long as the fifth polarized light is obtained. The first retardation plate 12 and the second retardation plate 14 may be film-shaped members.

Since the optical system 10 is a uniaxial (on-axis) optical system in which the optical axis of incident light and the optical axis of emitted light substantially coincide with each other, the space occupied by the optical system 10 can be reduced, and as a result, the display device 1A can be reduced in size. Since the optical system 10 is uniaxial, distortion, brightness unevenness, and the like of the virtual image V visually recognized by the user 22 can be reduced, and the design of the optical system 10 is facilitated.

Another example of the display device 1A will be described. In the present example, a display device 1A' differs from the display device 1A described above in the configuration (shape) of the second semi-transmissive mirror, but otherwise has the same configuration, and therefore the same components are given the same reference signs and detailed description will be omitted.

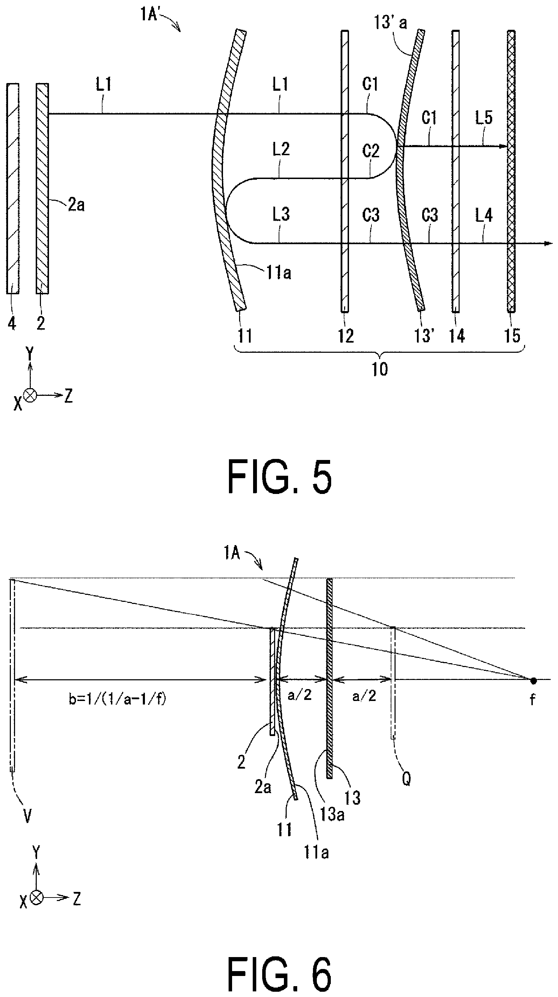

In the present example, the display device 1A' includes the display panel 2 and the optical system 10 as illustrated in FIG. 5. The optical system 10 includes the first semi-transmissive mirror 11, the first retardation plate 12, a second semi-transmissive mirror 13', the second retardation plate 14, and the polarizing plate 15. That is, in the optical system 10, a pair of semi-transmissive mirrors (the first semi-transmissive mirror 11 and a second semi-transmissive mirror 13'), the first semi-transmissive mirror 11, the first retardation plate 12, the second semi-transmissive mirror 13', the second retardation plate 14, and the polarizing plate 15 are arranged in this order in the emission direction of the display light from the display panel 2.

The second semi-transmissive mirror 13' includes a reflective surface 13'a having a convex shape. The second semi-transmissive mirror 13' may be positioned on the opposite side to the first semi-transmissive mirror 11 relative to the first retardation plate 12, and more specifically, the reflective surface 13'a may be positioned on the first retardation plate 12 side. The second semi-transmissive mirror 13' is also referred to as a convex half mirror. The second semi-transmissive mirror 13' may transmit a part (e.g., approximately 50%) of the incident light and reflect the remaining part (e.g., approximately 50%). The transmittance and the reflectance of light incident on the second semi-transmissive mirror 13' are not limited to 50%. At this time, the reflective surface of the second semi-transmissive mirror 13' diffuses the light incident from the first semi-transmissive mirror 11 side and reflected, and the reflective surface of the first semi-transmissive mirror 11 converges the light incident from the second semi-transmissive mirror 13 side and reflected.

The second semi-transmissive mirror 13' may include, for example, a base member and a semi-transmissive reflective layer positioned on a surface of the base member. The base member may have a transmittance of 100% or close to 100% for light in the visible light band. The base member may be made of, for example, inorganic glass, a resin material, or the like. The resin material may be, for example, an acrylic resin, a polycarbonate resin, or the like. The semi-transmissive reflective layer may be a thin metal film. The thin metal film may be made of a metal material such as aluminum or chromium. The semi-transmissive reflective layer is not limited to a thin metal film, and may be, for example, a dielectric multilayer film or the like.

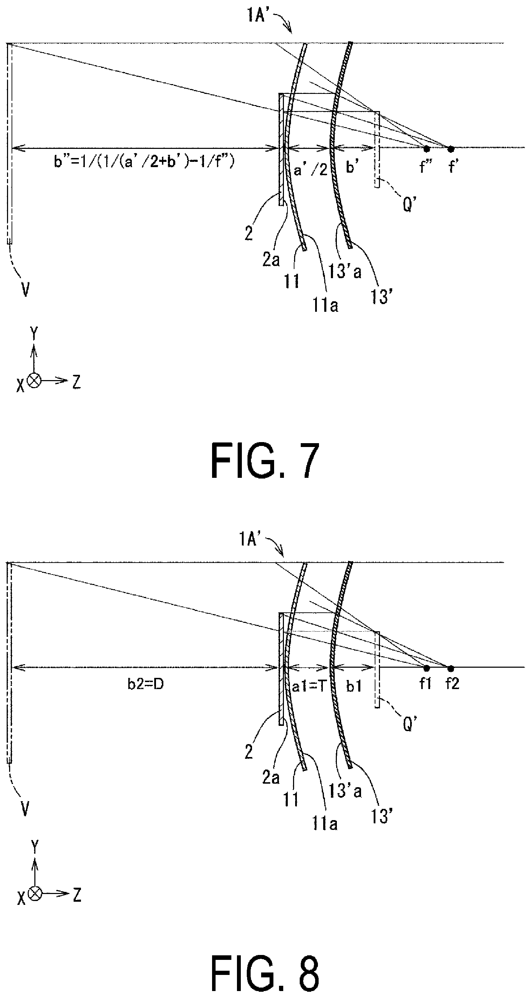

The optical system 10 may have the focal length of the second semi-transmissive mirror 13' longer than the distance between the display panel 2 and the second semi-transmissive mirror 13'. In other words, the optical system 10 may have the second semi-transmissive mirror 13' project a reduced virtual image Q' (see FIG. 7) of an object (i.e., the display surface 2a). The optical system 10 may have the focal length of the first semi-transmissive mirror 11 longer than the distance between the virtual image Q' and the first semi-transmissive mirror 11. In other words, the optical system 10 may have the first semi-transmissive mirror 11 project an enlarged virtual image V of an object (i.e., the virtual image Q'). In this case, the magnification and the projection distance of the virtual image V can be adjusted while reducing the thickness of the optical system 10 in the depth direction (Z axis direction).

Since the optical system 10 is a uniaxial (on-axis) optical system in which the optical axis of incident light and the optical axis of emitted light substantially coincide with each other, the space occupied by the optical system 10 can be reduced, and as a result, the display device 1A' can be reduced in size. Since the optical system 10 is uniaxial, distortion, brightness unevenness, and the like of the virtual image V visually recognized by the user 22 can be reduced, and the design of the optical system 10 is facilitated.

According to the display device 1A' of the present example, the optical system 10 can be thinned in the depth direction (Z axis direction), and therefore, a thin display device can be provided. Hereinafter, thinning of the optical system 10 will be described with reference to FIGs. 6 and 7. In the first semi-transmissive mirror 11 of the display device 1A or 1A', the reflective surface that reflects the display light emitted to the outside is the reflective surface 11a having a concave shape, and thus the first semi-transmissive mirror 11 will sometimes be called a concave mirror hereinafter. In the second semi-transmissive mirror 13 of the display device 1A, the reflective surface that reflects the display light emitted to the outside is the reflective surface 13a having a planar shape, and thus the second semi-transmissive mirror 13 will sometimes be called a plane mirror hereinafter. In the second semi-transmissive mirror 13' of the display device 1A', the reflective surface that reflects the display light emitted to the outside is the reflective surface 13'a having a convex shape, and thus the second semi-transmissive mirror 13' will sometimes be called a convex mirror hereinafter. The dimension of the optical system 10 in the depth direction (Z axis direction) will sometimes be called the thickness of the optical system 10.

FIG. 6 is a view describing projection of the virtual image V in the display device 1A. In FIG. 6, the irradiator 4 and optical members (the first retardation plate 12, the second retardation plate 14, and the polarizing plate 15) that do not contribute to the projection distance (virtual image distance) and the magnification of the virtual image V are omitted. A concave mirror 11 is arranged in contact with the display panel 2, allowing the distance between the display panel 2 and the concave mirror 11 to be regarded as "0". In the following description, the focal length of the concave mirror 11 is f, and the distance between the concave mirror 11 and a plane mirror 13 is a/2. The distance a/2 corresponds to the thickness of the optical system 10 of the display device 1A.

In the display device 1A, the virtual image Q of the display surface 2a by the plane mirror 13 is enlarged by the concave mirror 11 and project as the virtual image V. As illustrated in FIG. 6, the virtual image Q is positioned on the opposite side to the concave mirror 11 relative to the plane mirror 13, and the distance to the plane mirror 13 is a/2. The virtual image Q is an image in which the display surface 2a is enlarged at the same magnification (one time).

A virtual image distance b and a virtual image magnification m of the virtual image V are expressed by the following Equation (1) and Equation (2), respectively. The virtual image distance b is a distance between the virtual image V and the concave mirror 11, and the virtual image magnification m is a magnification of the virtual image V with respect to the display surface 2a.

$$b = 1/(1/a - 1/f) \ldots (1)$$

$$m = b/a \ldots (2)$$

[Table 1]

Table 1

| Configuration Example | Focal Length f | Thickness a/2 | Virtual Image Distance b | Virtual Image Magnification m |
|---|---|---|---|---|
| 1 | 200 | 50 | 200 | 2.0 |
| 2 | 101 | 33.5 | 200 | 3.0 |

Table 1 shows configuration examples 1 and 2 of the display device 1A. The focal length f, the thickness a/2, and the virtual image distance b shown in Table 1 are in units of "mm". In the configuration examples 1 and 2, the virtual image distance b is 200 mm, and the virtual image magnification m is 2 or 3. As shown in Table 1, when the optical system 10 includes the plane mirror 13, in order to set the virtual image distance b to 200 mm and the virtual image magnification m to 2, the thickness a/2 of the optical system 10 needs to be 50 mm (see Configuration Example 1), and in order to set the virtual image distance b to 200 mm and the virtual image magnification m to 3, the thickness a/2 of the optical cal system 10 needs to be 33.5 mm (see Configuration Example 2).

FIG. 7 is a view describing projection of the virtual image V in the display device 1A'. In FIG. 7, the irradiator 4 and optical members (the first retardation plate 12, the second retardation plate 14, and the polarizing plate 15) that do not contribute to the projection distance (virtual image distance) and the magnification of the virtual image V are omitted. The concave mirror 11 is arranged in contact with the display panel 2, allowing the distance between the display panel 2 and the concave mirror 11 to be regarded as "0". In the following description, the focal length of a convex mirror 13' is f', the focal length of the concave mirror 11 is f'', and the distance between the concave mirror 11 and the convex mirror 13' is a'/2. The distance a'/2 corresponds to the thickness of the optical system 10 of the display device 1A'.

In the display device 1A', the virtual image Q' of the display surface 2a by the convex mirror 13' is enlarged by the concave mirror 11 and project as the virtual image V. As illustrated in FIG. 7, the virtual image Q' is positioned on the opposite side to the concave mirror 11 relative to the convex mirror 13'. A distance b' between the virtual image Q' and the convex mirror 13' is expressed by the following Equation (3). A magnification m' of the virtual image Q' with respect to the display surface 2a is expressed by the following Equation (4). As is clear from Equation (3), since b' < a'/2, the magnification m' of the virtual image Q' becomes less than 1. Therefore, the virtual image Q' is a reduced virtual image of the display surface 2a.

$$b' = 1/\{1/f' + 1/(a'/2)\} \ldots (3)$$

$$m' = b'/(a'/2) \ldots (4)$$

A virtual image distance b'' and a virtual image magnification m'' of the virtual image V are expressed by the following Equations (5) and (6), respectively. The virtual image distance b'' is a distance between the virtual image V and the concave mirror 11, and the virtual image magnification m'' is a magnification of the virtual image V with respect to the display surface 2a.

$$b'' = 1/\{1/(a'/2 + b') - 1/f''\} \ldots (5)$$

$$m'' = (b'/(a'/2)) \times b''/(a'/2 + b') \ldots (6)$$

Table 2 shows configuration examples 3 and 4 of the display device 1A'. The focal lengths f' and f'', the thickness a'/2, and the virtual image distance b'' shown in Table 2 are in units of "mm". In the configuration examples 3 and 4, the virtual image distance b'' is 200 mm and the virtual image magnification m'' is 2 or 3, similarly to the configuration examples 1 and 2. As shown in Table 2, when the optical system 10 includes the convex mirror 13', the optical system 10 having the thickness a'/2 of 32 mm can set the virtual image distance b'' to 200 mm and the virtual image magnification m'' to 2 as in Configuration Example 1 (see Configuration Example 3), and the optical system 10 having the thickness a'/2 of 25.5 mm can set the virtual image distance b'' to 200 mm and the virtual image magnification m'' to 3 as in Configuration Example 2 (see Configuration Example 4). Therefore, according to the display device 1A', the optical system 10 can be thinned, and as a result, a thin display device can be provided.

[Table 2]

Table 2

| Configuration Example | Focal Length f' | Focal Length f'' | Thickness a'/ 2 | Virtual Image Distance b'' | Virtual Image Magnification m'' |
|---|---|---|---|---|---|
| 3 | 28.4 | 61.5 | 32 | 200 | 2.0 |
| 4 | 39.3 | 51.5 | 25.5 | 200 | 3.0 |

When given the value of each of the virtual image distance b'', the virtual image magnification m'', and the thickness a'/2, the display device 1A' can design the optical system 10, allowing them to be realized.

Hereinafter, the design of the optical system 10 of the display device 1A' will be described with reference to FIG. 8. In FIG. 8, the irradiator 4, the first retardation plate 12, the second retardation plate 14, and the polarizing plate 15 are omitted as in FIG. 7. The concave mirror 11 is arranged in contact with the display panel 2, allowing the distance between the display panel 2 and the concave mirror 11 to be regarded as "0". In the following description, the thickness of the optical system 10 is a1, the distance between the convex mirror 13' and the virtual image Q' is b1, and the distance between the concave mirror 11 and the virtual image V is b2. The magnification of the virtual image Q' with respect to the display surface 2a is m1, and the magnification of the virtual image V with respect to the virtual image Q' is m2. The focal length of the convex mirror 13' is f1, and the focal length of the concave mirror 11 is f2.

A magnification M of the virtual image V with respect to the display surface 2a is expressed by the product of the magnification m1 and the magnification m2 as shown in the following Equation (7). A distance a2 between the concave mirror 11 and the virtual image Q' is expressed by the sum of the thickness a1 and the distance b1 as shown in the following Equation (8).

$$M = m1 \times m2 \ldots (7)$$

$$a2 = a1 + b1 \ldots (8)$$

When the thickness a1 of the optical system 10 is defined as T and the virtual image distance (i.e., the distance b1 between the concave mirror 11 and the virtual image V) is defined as D, the magnification M is expressed by the following Equation (9).

$$M = m1 \times m2$$
$$= (b1/a1) \times (b2/a2)$$
$$= (b1/T) \times (D/a2) \ldots (9)$$

As a result of substituting the following Equation (10), which is established with respect to the distance b1 between the convex mirror 13' and the virtual image Q', into Equation (9), the following Equation (11) is obtained.

$$1/a1 = 1/b1 + 1/f1 \ldots (10)$$

$$M = f1 \times (1 + D/f2)/(T + f1) \ldots (11)$$

As a result of substituting the following Equation (12), which is established with respect to the distance b2 between the concave mirror 11 and the virtual image V, into Equation (8), the following Equation (13) is obtained.

$$1/a2 = 1/b2 + 1/f2 \ldots (12)$$

$$D \times f2/(D + f2) = T + T \times f1/(T + f1) \ldots (13)$$

From Equations (9) and (13), a focal length f1 of the convex mirror 13' and a focal length f2 of the concave mirror 11 are obtained as shown in the following Equations (14) and (15). A in Equation (15) is expressed by the following Equation (16).

$$f1 = M \times T \times T/(D - 2 \times M \times T) \ldots (14)$$

$$f2 = D \times A/(M - A) \ldots (15)$$

$$A = f1/(T + f1) \ldots (16)$$

As is seen from the above calculation, when given the value of each of the magnification M, the thickness T, and the virtual image distance D, the display device 1A' can determine the focal lengths f1 and f2 (i.e., design the optical system 10), allowing them to be realized.

In the display device 1A or 1A', the optical path length of light emitted from the display panel 2, transmitted through the first semi-transmissive mirror 11, reflected by the second semi-transmissive mirror 13 or 13', and reaching the first semi-transmissive mirror 11 may be shorter than the focal length of the first semi-transmissive mirror 11. In this case, the users 22 can be caused to visually recognize the virtual image V. In the display device 1A or 1A', the optical path length of light emitted from the display panel 2, transmitted through the first semi-transmissive mirror 11, reflected by the second semi-transmissive mirror 13 or 13', and reaching the first semi-transmissive mirror 11 may be longer than the focal length of the first semi-transmissive mirror 11. In this case, the users 22 can be caused to visually recognize a real image.

An image-forming device according to one embodiment of the present disclosure will be described. In the present embodiment, an image-forming device 100 includes a display device 1, 1A, 1A', or 1B. The image-forming device 100 causes the user 22 to visually recognize, as the virtual image V, the display light emitted from the display panel 2. Since the image-forming device 100 includes the display device 1, 1A, 1A', or 1B, an image-forming device that is reduced in size can be realized, and the users 22 can be caused to visually recognize the virtual image V with improved display quality. In particular, when the image-forming device 100 includes the display device 1A', a thin image-forming device can be realized. The image-forming device 100 may cause the user 22 to visually recognize, as a real image, the display light emitted from the display panel 2.

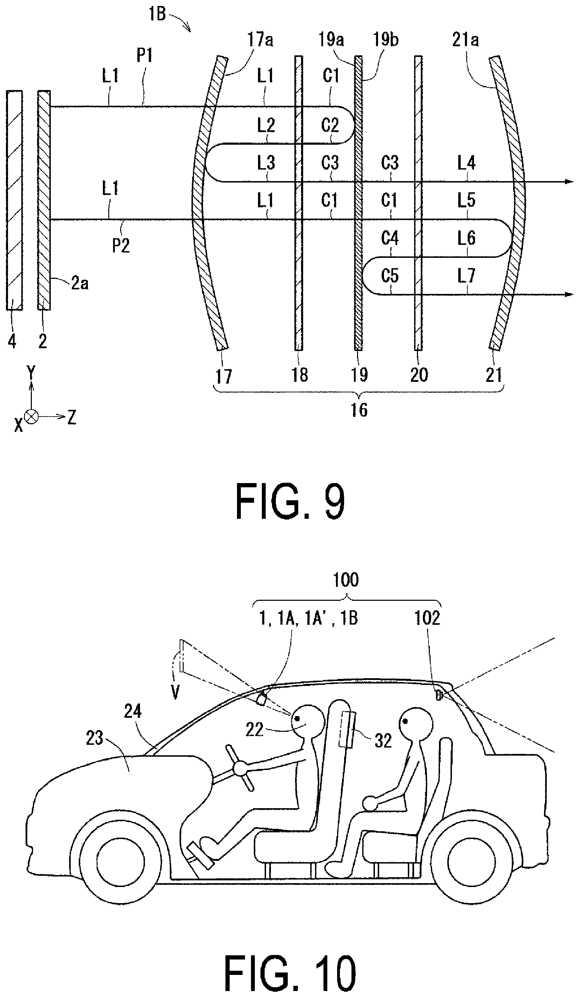

The image-forming device 100 may be equipped on a mobile body 23 as illustrated in FIG. 10. The mobile body 23 may be a vehicle. Although FIG. 10 illustrates a case where the vehicle is a passenger car, the vehicle is not limited to a passenger car, and may be an automobile such as a truck, a bus, or a trolley bus. The position of the display device 1, 1A, 1A', or 1B is arbitrary inside the mobile body 23. The display device 1, 1A, 1A', or 1B may be positioned on a dashboard (instrument panel), inside the dashboard, on the ceiling of the cabin, on the A-pillar, or the like. The image-forming device 100 may share a part of the configuration with other devices and components included in the mobile body 23.

As illustrated in FIG. 10, the image-forming device 100 may include a camera 102 that captures an image of peripheral scenery of the mobile body 23. Here, the periphery of the mobile body 23 may be at least one selected from the group consisting of front, rear, side, upper, and lower side of the mobile body 23. The camera 102 may include, for example, a charge coupled device (CCD) imaging element or a complementary metal oxide semiconductor (CMOS) imaging element. The image-forming device 100 and the camera 102 are connected to each other by wired communication and/or wireless communication. When the mobile body 23 is a vehicle, the image-forming device 100 and the camera 102 may be connected to each other via a network of the vehicle such as a control area network (CAN).

The image-forming device 100 may display at least a part of a captured image captured by the camera 102 on the display panel 2. In this case, the image-forming device 100 can cause the user 22 (driver of the mobile body 23) to visually recognize the peripheral scenery of the mobile body 23 as the virtual image V formed on a farther side than the image-forming device 100. As a result, since the user 22 can visually recognize the peripheral scenery of the mobile body 23 without greatly changing the gaze distance (gaze point) during driving of the mobile body 23, the user 22 visually recognizes the virtual image V with ease and can improve drive safety. Since the image-forming device 100 is an image-forming device small in size, even when arranged in the driver's cabin of the mobile body 23, it does not occupy a large volume in the driver's cabin, and is unlikely to hinder driving. The image-forming device 100 equipped on the mobile body 23 and causing the user 22 to visually recognize the peripheral scenery (e.g., rear scenery of the vehicle 23) of the mobile body 23 as the virtual image V is also referred to as a digital room mirror.

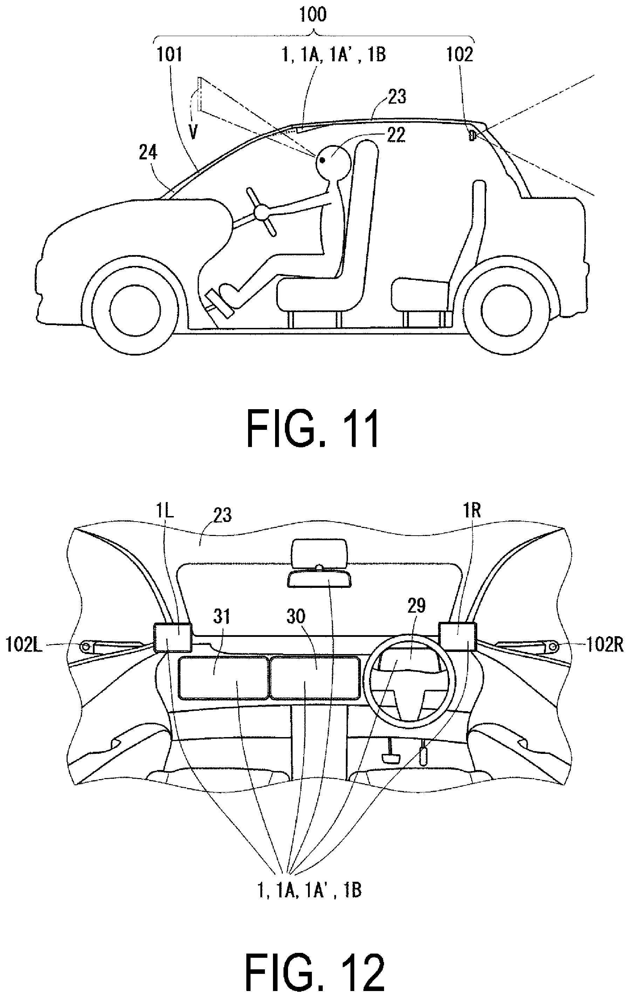

The image-forming device 100 may be applied to a digital side mirror. In this case, as illustrated in FIG. 12, the image-forming device 100 may include the display device 1, 1A, 1A', or 1B (hereinafter also called a left display device 1L) positioned in a left A-pillar of the mobile body 23, a camera 102 (hereinafter also called a left camera 102L) that captures an image of the left rear of the mobile body 23, the display device 1, 1A, 1A', or 1B (hereinafter also called a right display device 1R) positioned in a right A-pillar of the mobile body 23, and a camera 102 (hereinafter also called a right camera 102R) that captures an image of the right rear of the mobile body 23. The left display device 1L may cause the users 22 to visually recognize, as the virtual image V (hereinafter also called a virtual image V2), an image of the left rear of the mobile body 23 captured by the left camera 102L. The right display device 1R may cause the users 22 to visually recognize, as the virtual image V (hereinafter also called a virtual image V3), an image of the right rear of the mobile body 23 captured by the right camera 102R. The image may be a moving video (also referred to as a video) or a still image.

The image-forming device 100 may be applied to a cluster 29 in a dashboard of the mobile body 23 (see FIG. 12). In this case, the display device 1, 1A, 1A', or 1B may cause the users 22 to visually recognize, as the virtual image V (hereinafter, also called a virtual image V4), an image indicating information related to driving, such as a vehicle speed, an engine speed, and a remaining fuel amount.

The image-forming device 100 may be applied to a center information display (CID) 30 (see FIG. 12). In this case, the display device 1, 1A, 1A', or 1B may be arranged in a center cluster of the mobile body 23, and may cause the users 22 to visually recognize, as the virtual image V (hereinafter, also called a virtual image V5), an image indicating information related to navigation, in-vehicle environment (e.g., settings of an air conditioner, an audio device, and the like), and the like.

The image-forming device 100 may be applied to a passenger information display (PID) 31 (see FIG. 12). In this case, the display device 1, 1A, 1A', or 1B may be arranged in the vicinity of the assistant driver's seat in the dashboard, and may cause a passenger to visually recognize, as the virtual image V, a video of entertainment content and a video indicating information related to the audio device, the air conditioner, and the like.

The image-forming device 100 may be applied to a rear seat entertainment (RSE) system 32 (see FIG. 10). In this case, the display device 1, 1A, 1A', or 1B may be arranged on the back of the front seat, and may cause the passenger sitting on the rear seat of the mobile body 23 to visually recognize, as the virtual image V, a video of entertainment content and a video indicating information related to the audio device, the air conditioner, and the like.

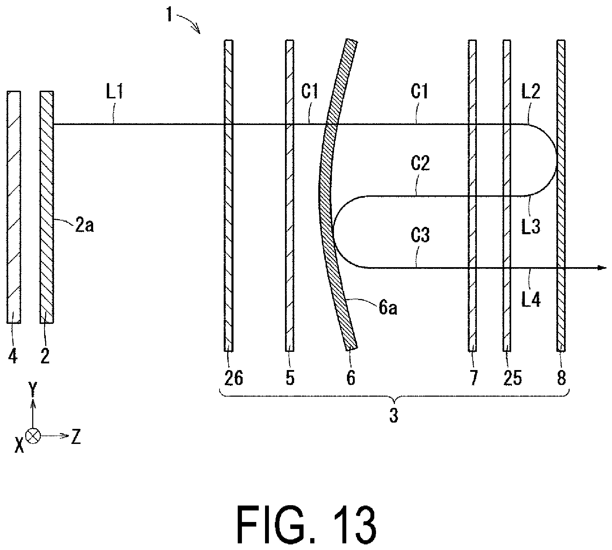

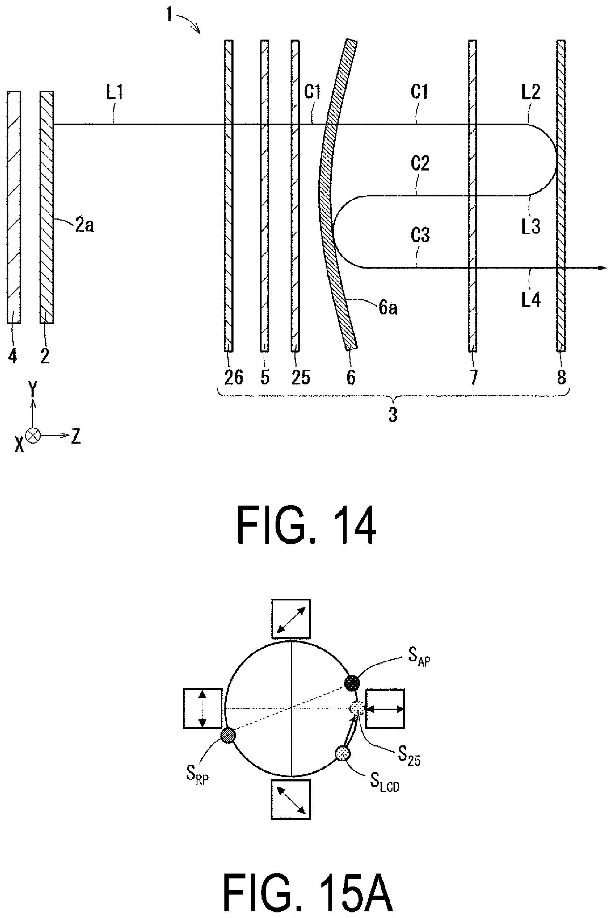

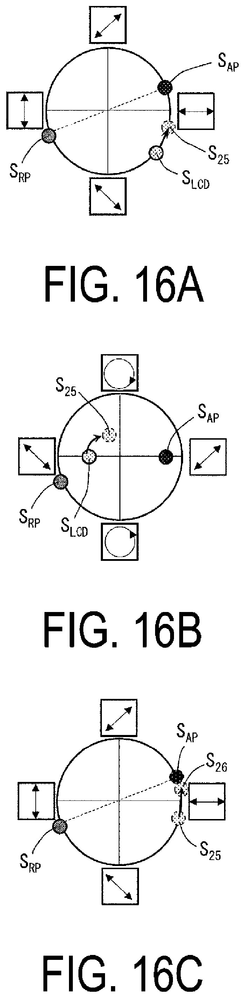

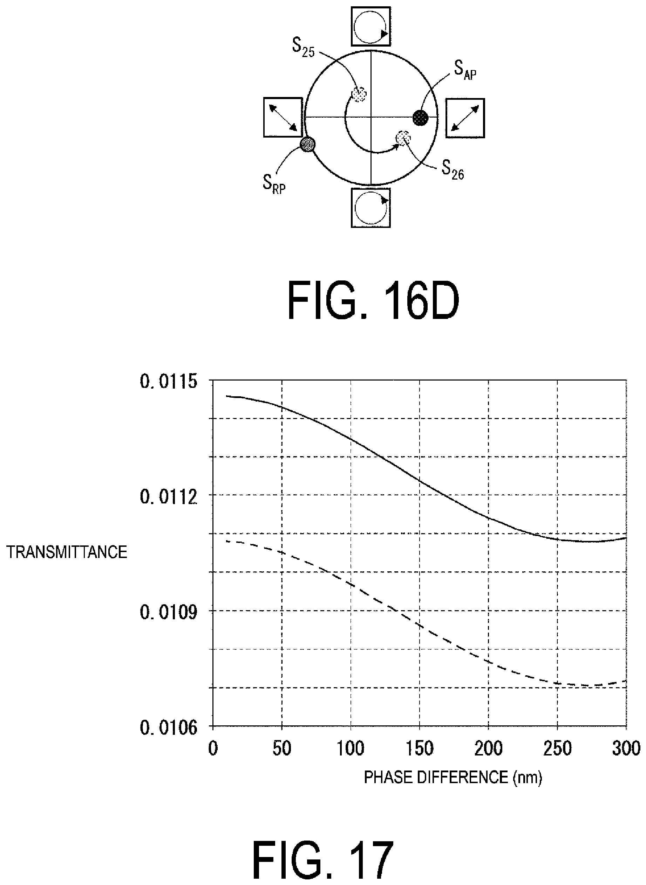

Other examples of the display devices 1, 1A, and 1A' will be described. FIGs. 13 and 14 are cross-sectional views describing another example of the display device, FIGs. 15A to 15D and 16A to 16D are views describing an optical system in another example of the display device, and FIG. 17 is a graph describing an optical system in another example of the display device. Although the display device 1 will be described below as an example, the same applies to the display devices 1A and 1A'.

In the display device 1, the light of the second linearly polarized light L2 is reflected by the reflective polarizing plate 8 and is not emitted from the display device 1 when the user 22 is positioned in front of the display device 1 (see FIGs. 2 and 3). In other words, in the display device 1, the transmission axis of a front (user 22 side) polarizing plate of the display panel 2 (liquid-crystal panel) and the transmission axis of the reflective polarizing plate 8 are orthogonal to each other (in crossed Nicol arrangement) when viewed from the front of the display device 1. Thus, as illustrated in FIGs. 2 and 3, the light of the second linearly polarized light L2 is not emitted from the display device 1, and the light of the fourth linearly polarized light L4 is emitted from the display device 1. In other words, the user 22 does not directly visually recognize the display panel 2, but visually recognizes, as the virtual image V, a reflected image reflected by the semi-transmissive mirror 6.

When the user 22 is not positioned in front of the display device 1, the crossed Nicol arrangement of the transmission axis of the front polarizing plate of the display panel 2 and the transmission axis of the reflective polarizing plate 8 may be broken, and a part of the light of the second linearly polarized light L2 may be transmitted through the reflective polarizing plate 8. As a result, the user 22 may be able to visually recognize both a real image on the display panel 2 directly viewed and the virtual image V reflected by the semi-transmissive mirror 6, and the display quality of the display device 1 may deteriorate.

In the present example, the display device 1 includes a third retardation plate 25 positioned between the display panel 2 and the reflective polarizing plate 8 as illustrated in FIGs. 13 and 14. Thus, even when the user 22 is not positioned in front of the display device 1, the relative angle between the transmission axis of the front polarizing plate of the display panel 2 and the transmission axis of the reflective polarizing plate 8 can be made close to the crossed Nicol arrangement, and deterioration of the display quality of the display device 1 can be reduced. The third retardation plate 25 may be a half-wavelength plate, a quarter-wavelength plate, a one-eighth-wavelength plate, a one-sixteenth-wavelength plate, or the like, or may be a wavelength plate that imparts another phase difference. The third retardation plate 25 may have the optical axis thereof substantially parallel or substantially perpendicular to the transmission axis of the reflective polarizing plate 8. The third retardation plate 25 may be positioned between the second retardation plate 7 and the reflective polarizing plate 8, or may be positioned between the display panel 2 and the first retardation plate 5.

In the present example, the display device 1 may further include a fourth retardation plate 26 positioned between the display panel 2 and the reflective polarizing plate 8 as illustrated in FIGs. 13 and 14. Thus, even when the user 22 is not positioned in front of the display device 1, the relative angle between the transmission axis of the front polarizing plate of the display panel 2 and the transmission axis of the reflective polarizing plate 8 can be made closer to the crossed Nicol arrangement, and deterioration of the display quality of the display device 1 can be further reduced. The fourth retardation plate 26 may be a half-wavelength plate, a quarter-wavelength plate, a one-eighth-wavelength plate, a one-sixteenth-wavelength plate, or the like, or may be a wavelength plate that imparts another phase difference. The fourth retardation plate 26 may have the optical axis thereof substantially parallel or substantially perpendicular to the transmission axis of the reflective polarizing plate 8. The fourth retardation plate 26 may be positioned between the second retardation plate 7 and the reflective polarizing plate 8, or may be positioned between the display panel 2 and the first retardation plate 5.

The third retardation plate 25 and the fourth retardation plate 26 may be positioned at an arbitrary position as long as they are positioned between the display panel 2 and the reflective polarizing plate 8. When another optical element is not positioned between the third retardation plate 25 and the fourth retardation plate 26, the third retardation plate 25 and the fourth retardation plate 26 may be in contact with each other. In this case, the thickness in the depth direction of the optical system 3 can be reduced. The third retardation plate 25 and the fourth retardation plate 26 may have the optical axes thereof substantially parallel or substantially perpendicular to the transmission axis of the reflective polarizing plate 8, and the optical axis of the third retardation plate 25 may be substantially perpendicular to the optical axis of the fourth retardation plate 26.

One of the third retardation plate 25 and the fourth retardation plate 26 may be a quarter-wavelength plate, and the other may be a half-wavelength plate. In this case, deterioration of the display quality of the display device 1 can be effectively reduced. Both the third retardation plate 25 and the fourth retardation plate 26 may be half-wavelength plates. In this case, deterioration of the display quality of the display device 1 can be more effectively reduced.

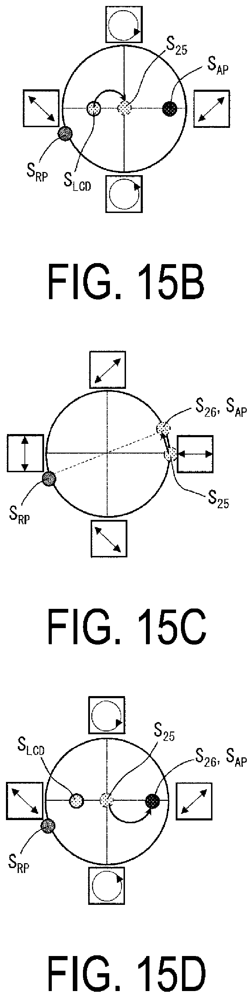

FIGs. 15A, 15B, 15C, and 15D illustrate Poincaré spheres illustrating optical functions (influences on a polarization state of light) of the third retardation plate 25 and the fourth retardation plate 26 when the third retardation plate 25 and the fourth retardation plate 26 are half-wavelength plates. FIGs. 15A and 15B are views describing the optical function of the third retardation plate 25, and FIGs. 15C and 15D are views describing the optical function of the fourth retardation plate 26. FIGs. 15A and 15C illustrate views of the Poincaré spheres as viewed from the north pole (S3 axis direction), and FIGs. 15B and 15D illustrate views of the Poincaré spheres as viewed from the side surface (S1 axis direction). In FIGs. 15A, 15B, 15C, and 15D, $S_{LCD}$ indicates the polarization state of the light immediately after being emitted from the display panel 2. $S_{25}$ indicates the polarization state of the light passing through the third retardation plate 25, and $S_{26}$ indicates the polarization state of the light passing through the fourth retardation plate 26. It can be said that $S_{26}$ indicates the polarization state of the light immediately before being incident on the reflective polarizing plate 8. $S_{RP}$ indicates the polarization state of the light transmitted through the reflective polarizing plate 8 at a transmittance of substantially 100%, and $S_{AP}$ is the antipodal point (point symmetrical with respect to the center of the Poincaré sphere) of $S_{RP}$. When $S_{26}$ is positioned at $S_{AP}$ or positioned in the vicinity of $S_{AP}$, the possibility that the light emitted from the display panel 2 and passing through the third retardation plate 25 and the fourth retardation plate 26 is transmitted through the reflective polarizing plate 8 can be reduced. As a result, the possibility that the user 22 visually recognizes the real image of the display panel 2 directly viewed can be reduced, and deterioration of the display quality of the display device 1 can be reduced.

As illustrated in FIGs. 15C and 15D, when the third retardation plate 25 and the fourth retardation plate 26 are half-wavelength plates, $S_{26}$ is substantially positioned at $S_{AP}$. Therefore, the possibility that the user 22 visually recognizes the real image of the display panel 2 directly viewed can be reduced, and deterioration of the display quality of the display device 1 can be reduced.

FIGs. 16A, 16B, 16C, and 16D illustrate Poincaré spheres illustrating optical functions of the third retardation plate 25 and the fourth retardation plate 26 when the third retardation plate 25 is a quarter-wavelength plate and the fourth retardation plate 26 is a half-wavelength plate. FIGs. 16A and 16B are views describing the optical function of the third retardation plate 25, and FIGs. 16C and 16D are views describing the optical function of the fourth retardation plate 26. FIGs. 16A and 16C illustrate views of the Poincaré spheres as viewed from the north pole (S3 axis direction), and FIGs. 16B and 16D illustrate views of the Poincaré spheres as viewed from the side surface (S1 axis direction). $S_{LCD}$, $S_{25}$, $S_{26}$, $S_{RP}$, and $S_{AP}$ are as described above.

As illustrated in FIGs. 16C and 16D, when the third retardation plate 25 is a quarter-wavelength plate and the fourth retardation plate 26 is a half-wavelength plate, $S_{26}$ is positioned in the vicinity of $S_{AP}$. Therefore, the possibility that the user 22 visually recognizes the real image of the display panel 2 directly viewed can be reduced, and deterioration of the display quality of the display device 1 can be reduced.

FIG. 17 is a graph showing a relationship between light transmittance of an optical system in which the third retardation plate 25 and the fourth retardation plate 26 are inserted between polarizing plates PP1 and PP2 whose transmission axes are orthogonal to each other and a phase difference between the third retardation plate 25 and the fourth retardation plate 26. FIG. 17 shows the result obtained by simulation. The incident light was green light having a wavelength $\lambda$ of 550 nm. The polarizing plate PP1, the third retardation plate 25, the fourth retardation plate 26, and the polarizing plate PP2 are arranged in this order in the feed direction of the incident light. The polarizing plate PP1 imitates the front polarizing plate of the display panel 2, and the polarizing plate PP2 imitates the reflective polarizing plate 8.

The solid line in the graph of FIG. 17 indicates the transmittance when the phase difference of the fourth retardation plate 26 is fixed to 0 nm and the phase difference of the third retardation plate 25 is varied, and becomes minimum when the phase difference of the third retardation plate 25 is about 275 nm (half of the wavelength $\lambda$ of the incident light). The broken line in the graph of FIG. 17 indicates the transmittance when the phase difference of the third retardation plate 25 is fixed to 270 nm and the phase difference of the fourth retardation plate 26 is varied, and becomes minimum when the phase difference of the fourth retardation plate 26 is about 275 nm (half of the wavelength $\lambda$ of the incident light).

The simulation result shown in the graph of FIG. 17 indicates that, when the third retardation plate 25 and the fourth retardation plate 26 are half-wavelength plates, the display device 1 can effectively reduce the possibility that the user 22 visually recognizes the real image of the display panel 2 directly viewed, and can effectively reduce deterioration of the display quality of the display device 1. It is found that even when having the phase difference of the fourth retardation plate 26 fixed to 0 nm (i.e., when including only the third retardation plate 25), the display device 1 can effectively reduce the possibility that the user 22 visually recognizes the real image of the display panel 2 directly viewed, and can effectively reduce deterioration of the display quality of the display device 1 as long as the third retardation plate 25 can impart a phase difference larger than 0 nm (i.e., non-zero) to the light incident on the third retardation plate 25.

The same applies to the display devices 1A and 1A'. The display device 1A or 1A' may include the third retardation plate 25 positioned between the display panel 2 and the polarizing plate 15. In this case, the possibility that the user 22 visually recognizes the real image of the display panel 2 directly viewed can be reduced, and deterioration of the display quality of the display device 1A or 1A' can be reduced. The display device 1A or 1A' may further include the fourth retardation plate 26 positioned between the display panel 2 and the polarizing plate 15. In this case, the possibility that the user 22 visually recognizes the real image of the display panel 2 directly viewed can be further reduced, and deterioration of the display quality of the display device 1A or 1A' can be further reduced. The third retardation plate 25 and the fourth retardation plate 26 may be half-wavelength plates, quarter-wavelength plates, one-eighth-wavelength plates, one-sixteenth-wavelength plates, or the like, or may be wavelength plates that impart other phase differences. One of the third retardation plate 25 and the fourth retardation plate 26 may be a quarter-wavelength plate, and the other may be a half-wavelength plate. In this case, deterioration of the display quality of the display device 1 can be effectively reduced. Both the third retardation plate 25 and the fourth retardation plate 26 may be half-wavelength plates. In this case, deterioration of the display quality of the display device 1 can be more effectively reduced. The third retardation plate 25 and the fourth retardation plate 26 may be positioned at an arbitrary position as long as they are positioned between the display panel 2 and the polarizing plate 15. The third retardation plate 25 and the fourth retardation plate 26 may be positioned between the second retardation plate 14 and the polarizing plate 15, or may be positioned between the display panel 2 and the first retardation plate 12. The third retardation plate 25 and the fourth retardation plate 26 may have the optical axes thereof substantially parallel or substantially perpendicular to the transmission axis of the polarizing plate 15. The third retardation plate 25 and the fourth retardation plate 26 may have the optical axes thereof substantially parallel or substantially perpendicular to the transmission axis of the polarizing plate 15, and the optical axis of the third retardation plate 25 may be substantially perpendicular to the optical axis of the fourth retardation plate 26.

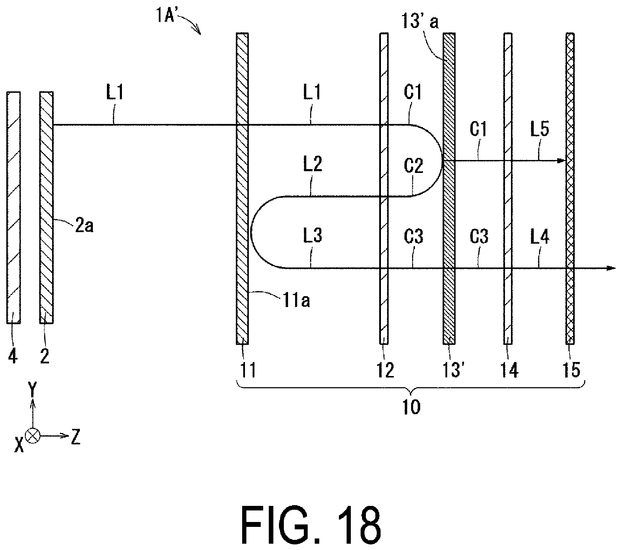

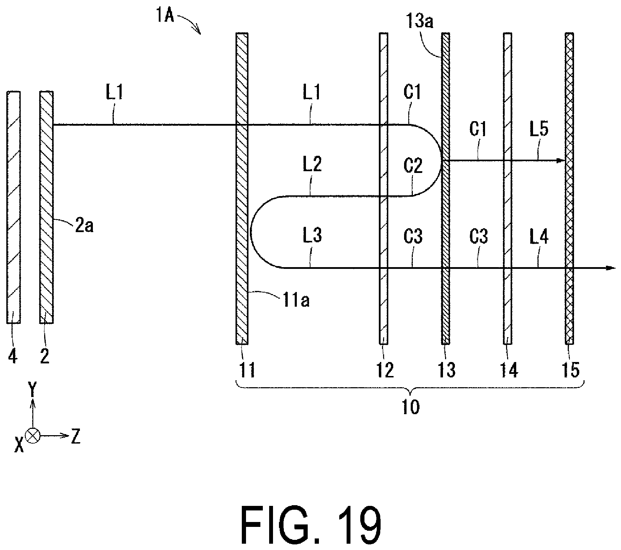

Other examples of the display device 1, 1A, 1A', or 1B will be described. FIG. 18 is a cross-sectional view illustrating another example of the display device 1A', and FIG. 19 is a cross-sectional view illustrating another example of the display device 1A. Description of configurations or parts described in the above embodiments may be omitted.

The second semi-transmissive mirror 13' of the display device 1A' may include a holographic optical element (HOE). In this case, as illustrated in FIG. 18, an optical element having a flat plate shape can realize the optical function of the second semi-transmissive mirror 13', and can reduce the thickness in the depth direction (Z axis direction) of the second semi-transmissive mirror 13'. As a result, the display device 1A' can be reduced in size in the depth direction. Since the second semi-transmissive mirror 13' is an optical element having a flat plate shape, the distance between the second semi-transmissive mirror 13' and the second retardation plate 14 can be reduced, or the second semi-transmissive mirror 13' and the second retardation plate 14 can be brought into contact with each other, thereby enabling further size reduction of the display device 1A' in the depth direction.

The first semi-transmissive mirror 11 of the display device 1A' may include an HOE. In this case, as illustrated in FIG. 18, an optical element having a flat plate shape can realize the optical function of the first semi-transmissive mirror 11, and can reduce the thickness in the depth direction of the first semi-transmissive mirror 11. As a result, the display device 1A' can be reduced in size in the depth direction. Since the first semi-transmissive mirror 11 is an optical element having a flat plate shape, the distance between the first semi-transmissive mirror 11 and the display panel 2 can be reduced, or the first semi-transmissive mirror 11 and the display panel 2 can be brought into contact with each other, thereby enabling further size reduction of the display device 1A' in the depth direction.

If the first semi-transmissive mirror 11 does not have polarization selectivity, the amount of light emitted from the display device 1A' decreases, and the brightness of the virtual image V visually recognized by the user 22 decreases. Therefore, the first semi-transmissive mirror 11 including the HOE may have polarization selectivity. For example, in the first semi-transmissive mirror 11 including the HOE, a plurality of thin metal wires (metal nanowire grids) may be formed on a surface positioned on the display panel 2 side or a surface positioned on the first retardation plate 12 side, the thin metal wires realizing polarization selectivity of transmitting S-polarized light and reflecting P-polarized light. In this case, a brightness decrease of the virtual image V visually recognized by the user 22 can be reduced.

The first semi-transmissive mirror 11 of the display device 1A may include an HOE. In this case, as illustrated in FIG. 19, an optical element having a flat plate shape can realize the optical function of the first semi-transmissive mirror 11, and can reduce the thickness in the depth direction of the first semi-transmissive mirror 11. As a result, the display device 1A can be reduced in size in the depth direction. Since the first semi-transmissive mirror 11 is an optical element having a flat plate shape, the distance between the first semi-transmissive mirror 11 and the display panel 2 can be reduced, or the first semi-transmissive mirror 11 and the display panel 2 can be brought into contact with each other, thereby enabling further size reduction of the display device 1A in the depth direction. The first semi-transmissive mirror 11 including the HOE may have polarization selectivity. For example, in the first semi-transmissive mirror 11 including the HOE, the plurality of thin metal wires may be formed on a surface positioned on the display panel 2 side or a surface positioned on the first retardation plate 12 side, the thin metal wires realizing polarization selectivity of transmitting S-polarized light and reflecting P-polarized light. In this case, a brightness decrease of the virtual image V visually recognized by the user 22 can be reduced.

The semi-transmissive mirror 6 of the display device 1 may include an HOE. In this case, an optical element having a flat plate shape can realize the optical function of the semi-transmissive mirror 6, and can reduce the thickness in the depth direction of the semi-transmissive mirror 6. As a result, the display device 1 can be reduced in size in the depth direction. Since the semi-transmissive mirror 6 is an optical element having a flat plate shape, the distance between the semi-transmissive mirror 6 and the first retardation plate 5 can be reduced, or the semi-transmissive mirror 6 and the first retardation plate 5 can be brought into contact with each other, thereby enabling further size reduction of the display device 1 in the depth direction.

The holographic optical element may have an interference fringe pattern, for example, and may diffract incident light in a predetermined direction.

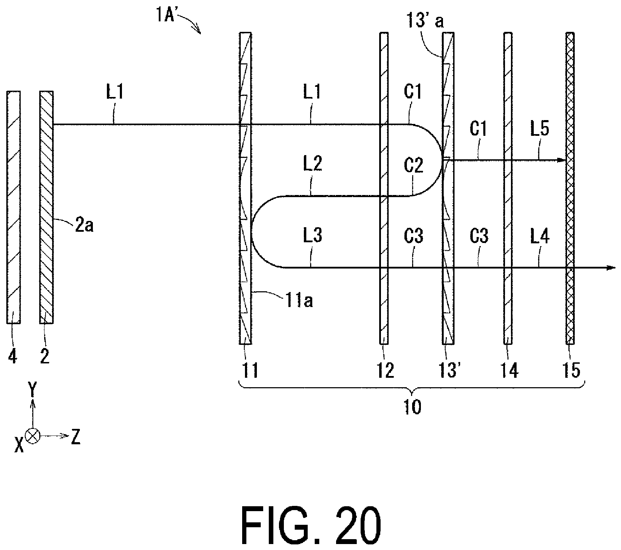

In the display device 1A', the second semi-transmissive mirror 13' may include a Fresnel lens. In other words, the display device 1A' may have a Fresnel shape on the surface of the second semi-transmissive mirror 13'. In this case, as illustrated in FIG. 20, an optical element having a substantially flat plate shape having a thickness (dimension in the depth direction) smaller than that of the convex half mirror can realize the optical function of the second semi-transmissive mirror 13', and can reduce the thickness in the depth direction of the second semi-transmissive mirror 13'. As a result, the display device 1A' can be reduced in size in the depth direction. Since the second semi-transmissive mirror 13' has a substantially flat plate shape, the distance between the second semi-transmissive mirror 13' and the second retardation plate 14 can be reduced, or the second semi-transmissive mirror 13' and the second retardation plate 14 can be brought into contact with each other, thereby enabling further size reduction of the display device 1A' in the depth direction. The second semi-transmissive mirror 13' including a Fresnel lens is also referred to as a Fresnel half mirror 13'.

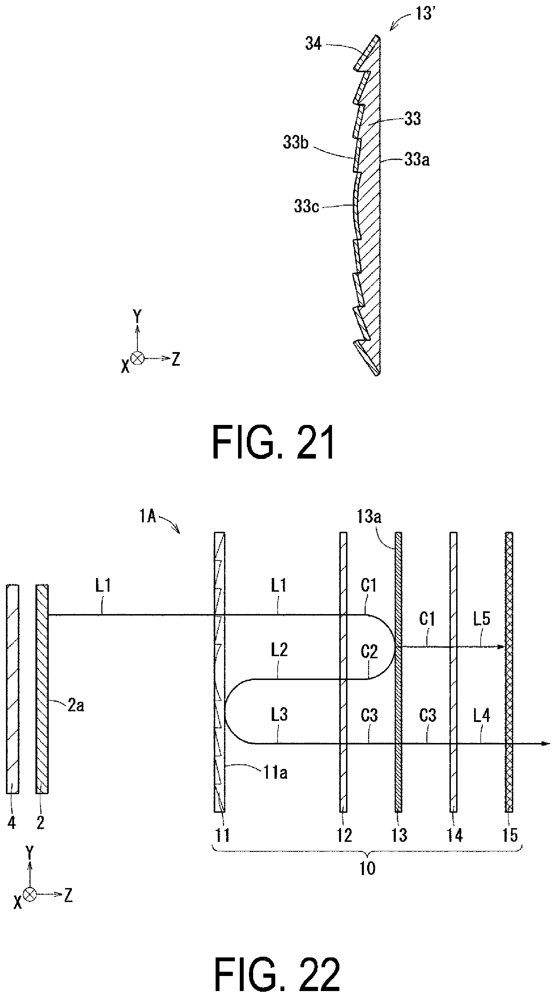

As illustrated in FIG. 21, Fresnel half mirror 13' may include a Fresnel lens (Fresnel convex lens) 33 including a first surface 33a having a planar shape positioned on the second retardation plate 14 side and a second surface 33b having a Fresnel shape positioned on the first retardation plate 12 side, and a semi-transmissive reflective layer 34 positioned on the second surface 33b. The Fresnel shape has concentric grooves centered at a reference point 33c. The groove includes a surface substantially perpendicular to the first surface 33a and an inclined surface inclined with respect to the first surface 33a. The inclined surface may be a curved surface or a flat surface. The semi-transmissive reflective layer 34 may be positioned on the inclined surface of the Fresnel shape. The semi-transmissive reflective layer 34 may transmit a part (e.g.,

approximately 50%) of the incident light and reflect the remaining part (e.g., approximately 50%). The transmittance and the reflectance of light incident on the semi-transmissive reflective layer 34 are not limited to 50%. The semi-transmissive reflective layer 34 may be a thin metal film. The thin metal film may be made of a metal material such as aluminum or chromium. The thin metal film may be formed by a vapor deposition method such as, for example, a chemical vapor deposition (CVD) method, a physical vapor deposition (PVD) method, or the like.

The Fresnel half mirror 13' has an optical function as a lens and an optical function as a half mirror. The optical function (e.g., focal length) as a lens is determined by the curvature and the inclination angle of the inclined surface, the index of refraction of the material constituting a Fresnel lens 33, and the like. The optical function (e.g., focal length, transmittance, and the like) as a half mirror is determined by the curvature and the inclination angle of the inclined surface, the transmittance of the semi-transmissive reflective layer 34, and the like.

In the Fresnel half mirror 13', a surface positioned on the second retardation plate 14 side may be flattened by a transparent material layer formed on the second surface 33b of the Fresnel lens 33. The transparent material layer may be made of a material having an index of refraction substantially identical to that of the material constituting the Fresnel lens 33. The transparent material layer may be made of the same material as the material constituting the Fresnel lens 33.

In the display device 1A', the first semi-transmissive mirror 11 may include a Fresnel lens. In other words, the display device 1A' may have a Fresnel shape on the surface of the first semi-transmissive mirror 11. In this case, as illustrated in FIG. 20, the thickness of the first semi-transmissive mirror 11 can be reduced, and as a result, the display device 1A' can be reduced in size in the depth direction. Since the first semi-transmissive mirror 11 including the Fresnel lens has a substantially flat plate shape, the distance between the first semi-transmissive mirror 11 and the display panel 2 can be reduced, or the first semi-transmissive mirror 11 and the display panel 2 can be brought into contact with each other, thereby enabling further size reduction of the display device 1A' in the depth direction. The first semi-transmissive mirror 11 including a Fresnel lens is also referred to as a Fresnel half mirror 11. The Fresnel half mirror 11 may have the same configuration as that of the Fresnel half mirror 13'. The Fresnel half mirror 11 may include a Fresnel concave lens.

If the first semi-transmissive mirror 11 is replaced with the Fresnel half mirror 11 that does not have polarization selectivity, the amount of light emitted from the display device 1A' decreases, and the brightness of the virtual image V visually recognized by the user 22 decreases. Therefore, the Fresnel half mirror 11 may have polarization selectivity. For example, in the Fresnel half mirror 11, a plurality of thin metal wires (metal nanowire grids) may be formed on a surface positioned on the display panel 2 side or a surface positioned on the first retardation plate 12 side, the thin metal wires realizing polarization selectivity of transmitting S-polarized light and reflecting P-polarized light. This can reduce a brightness decrease of the virtual image V visually recognized by the user 22.

As illustrated in FIG. 21, the first semi-transmissive mirror 11 of the display device 1A may include a Fresnel lens. In other words, the display device 1A may have a Fresnel shape on the surface of the first semi-transmissive mirror 11. In this case, the thickness of the first semi-transmissive mirror 11 can be reduced, and as a result, the display device 1A can be reduced in size in the depth direction. Since the first semi-transmissive mirror 11 including the Fresnel lens has a substantially flat plate shape, the distance between the first semi-transmissive mirror 11 and the display panel 2 can be reduced, or the first semi-transmissive mirror 11 and the display panel 2 can be brought into contact with each other, thereby enabling further size reduction of the display device 1A in the depth direction. The first semi-transmissive mirror 11 including the Fresnel lens may have polarization selectivity. For example, in first semi-transmissive mirror 11 including the Fresnel lens, a plurality of thin metal wires may be formed on a surface positioned on the display panel 2 side or a surface positioned on the first retardation plate 12 side, the thin metal wires realizing polarization selectivity of transmitting S-polarized light and reflecting P-polarized light. In this case, a brightness decrease of the virtual image V visually recognized by the user 22 can be reduced.

The semi-transmissive mirror 6 of the display device 1 may include a Fresnel lens. In other words, the display device 1 may have a Fresnel shape on the surface of the semi-transmissive mirror 6. In this case, the thickness of the semi-transmissive mirror 6 can be reduced, and as a result, the display device 1 can be reduced in size in the depth direction. Since the semi-transmissive mirror 6 including the Fresnel lens is an optical element having a substantially flat plate shape, the distance between the semi-transmissive mirror 6 and the first retardation plate 5 can be reduced, or the semi-transmissive mirror 6 and the first retardation plate 5 can be brought into contact with each other, thereby enabling further size reduction of the display device 1 in the depth direction.

Other examples of the display device 1, 1A, 1A', or 1B will be described. The same components as those of the display device 1, 1A, 1A', or 1B are given the same reference signs and detailed description will be omitted. In the present example, a display device 1C includes the display panel 2, an optical system 35, and the housing 36 as illustrated in FIG. 26.

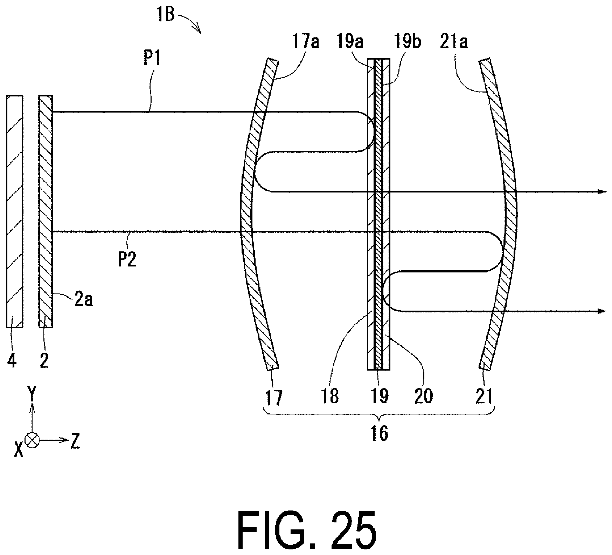

The display panel 2 includes the display surface 2a and displays a display image on the display surface 2a. The optical system 35 projects, as the virtual image V, the display light emitted from the display panel 2 in the field of view of the user 22. The optical system 35 may be the optical system 3 (see FIGs. 2, 3, and 23), the optical system 10 (see FIGs. 4, 5, and 24), or the optical system 16 (see FIGs. 9 and 25). FIGs. 26 and 27 illustrates a case where the optical system 35 is the optical system 3 illustrated in FIG. 23.

The housing 36 houses the display panel 2 and the optical system 35. The housing 36 may hold the display panel 2 and the optical system 35. When the display device 1C includes the irradiator 4, the housing 36 may house the irradiator 4 and hold the irradiator 4. The housing 36 may include a viewport that enables the inside of the housing 36 to be visually recognizable from the outside of the housing 36. The housing 36 may include the window (opening) 37 that transmits the light emitted from the optical system 35. The window (opening) 37 may function as a viewport. The display device 1C may be arranged with the window 37 and the display panel 2 overlapping each other when the window 37 of the housing 36 is viewed. The display device 1C may be arranged with the window 37 and the optical system 35 overlapping each other when the window 37 of the housing 36 is viewed. The display device 1C may be arranged with the display panel 2 and the optical system 35 overlapping each other when the window 37 of the housing 36 is viewed. In this case, the space occupied by the display device 1C can be reduced, and as a result, the display device 1C can be reduced in size. In the display device 1C, the display light emitted from the display panel 2 propagates substantially along a single axis and formed as the virtual image V. Accordingly, distortion, brightness unevenness, and the like of the virtual image V visually recognized by the user 22 can be reduced, and design of the optical system 35 is facilitated.

The housing 36 may include a member that enables the inside of the housing 36 arranged in the window (opening) 37 to be visually recognized from the outside of the housing 36. As illustrated in FIGs. 26 and 27, the housing 36 may include the light-transmissive plate 38 arranged in the window 37 (opening). The light-transmissive plate 38 may transmit the light emitted from the optical system 35. The light-transmissive plate 38 may at least partially close the window (opening) 37. The light-transmissive plate 38 may be made of, for example, glass, resin, or the like. The member (e.g., the light-transmissive plate 38) that enables the inside of the housing 36 arranged in the window (opening) 37 to be visually recognized from the outside of the housing 36 may function as a viewport.

The optical system 35 (optical system 3) may include the third retardation plate 25 and the fourth retardation plate 26. The third retardation plate 25 may be positioned on a surface positioned on the semi-transmissive mirror 6 side of the second retardation plate 7. The fourth retardation plate 26 may be positioned on a surface positioned on the semi-transmissive mirror 6 side of the third retardation plate 25. Thus, even when the user 22 is not positioned in front of the display device 1C, the relative angle between the transmission axis of the front polarizing plate of the display panel 2 and the transmission axis of the reflective polarizing plate 8 can be made close to the crossed Nicol arrangement, and deterioration of the display quality of the display device 1C can be reduced. The third retardation plate 25 and the fourth retardation plate 26 may be half-wavelength plates, but no such limitation is intended. The third retardation plate 25 and the fourth retardation plate 26 may be quarter-wavelength plates, one-eighth-wavelength plates, one-sixteenth-wavelength plates, or the like, or may be wavelength plates that impart other phase differences. The third retardation plate 25 and the fourth retardation plate 26 may be wavelength plates that impart the same phase difference or may be wavelength plates that impart different phase differences. The third retardation plate 25 may have the optical axis thereof substantially parallel or substantially perpendicular to the transmission axis of the reflective polarizing plate 8.

According to the present disclosure, a decrease in display quality in a small display device can be reduced, and light utilization efficiency can be improved. According to the present disclosure, a small image-forming device that can cause a user to visually recognize a virtual image in a favorable manner can be provided.

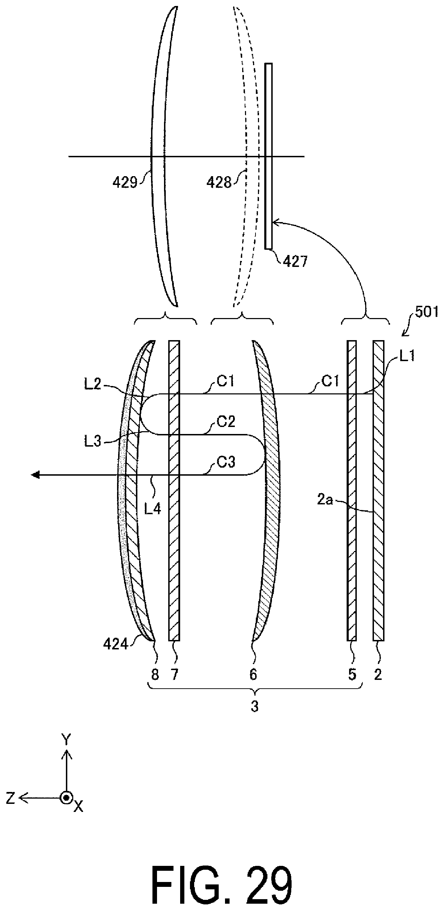

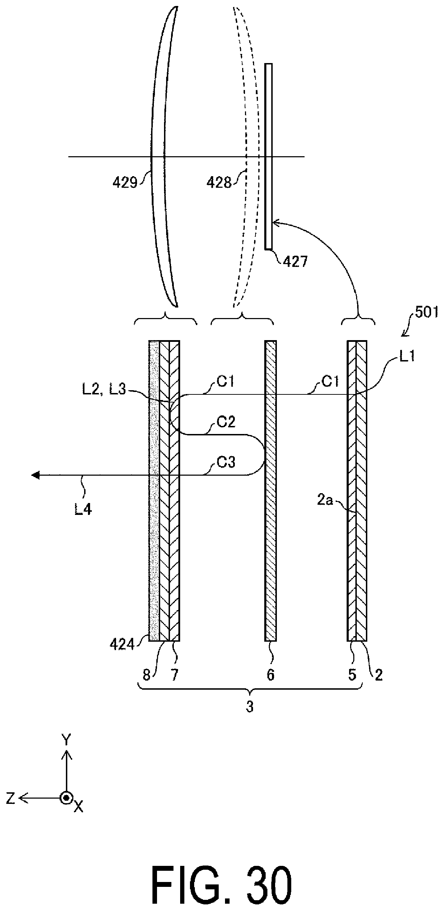

Each of FIGs. 29 and 30 is a cross-sectional view illustrating an example of the configuration of a display device according to an embodiment of the present disclosure. In each of FIGs. 29 and 30, illustration of members not related to the description may be omitted. Description of configurations or parts equivalent to those of the above-described examples may be omitted.

A display device 501 includes the display panel 2 and the optical system 3. The optical system 3 may include the first retardation plate 5, the semi-transmissive mirror 6, the second retardation plate 7, and the reflective polarizing plate 8. In the optical system 3, the first retardation plate 5, the semi-transmissive mirror 6, the second retardation plate 7, and the reflective polarizing plate 8 may be arranged in this order from the display panel 2 side.

The function of the optical system 3 in each of FIGs. 29 and 30 is the same as the function of the optical system 3 in FIG. 2 from the display light of the first linearly polarized light L1 being transmitted through the first retardation plate 5 to the light of the fourth linearly polarized light L4 being transmitted through the reflective polarizing plate 8 and emitted to the outside.

In the present embodiment, the reflective polarizing plate 8 can concentrate or converge the light incident on and reflected by the reflective polarizing plate 8. Specifically, the reflective polarizing plate 8 has a concave shape positioned on the display panel 2 side. As a result, the reflective polarizing plate 8 can concentrate or converge light. It can also be said that the reflective polarizing plate 8 has a concave shape open on the display panel 2 side. It can also be said that the reflective polarizing plate 8 has a concave shape recessed on the opposite side to the display panel 2. It can also be said that the reflective polarizing plate 8 has a convex shape protruding on the opposite side to the display panel 2 (user 22 side). As illustrated in FIG. 29, the reflective polarizing plate 8 may be arranged on an inner surface of a base member 424 having a concave shape on the display panel 2 side.

In the present embodiment, the semi-transmissive mirror 6 can concentrate or converge the light incident on and reflected by the semi-transmissive mirror 6. Specifically, the semi-transmissive mirror 6 has a concave shape positioned on the opposite side to (user 22 side) the display panel 2. As a result, the semi-transmissive mirror 6 can concentrate or converge light. It can also be said that the semi-transmissive mirror 6 has a concave shape open on the user 22 side. It can also be said that the semi-transmissive mirror 6 has a concave shape recessed toward the display panel side. It can also be said that the semi-transmissive 6 has a convex shape protruding toward the display panel 2 side.

As illustrated in FIG. 30, the reflective polarizing plate 8 and/or the semi-transmissive mirror 6 may have a flat plate shape. In this case, the reflective polarizing plate 8 and/or the semi-transmissive mirror 6 may be a holographic optical element, or the reflective polarizing plate 8 and/or the semi-transmissive mirror 6 may have a surface shape having a Fresnel shape. In this case, the reflective polarizing plate 8 may be arranged on the surface of the base member 424 of a flat plate. An example of the material of the base member 424 is glass.

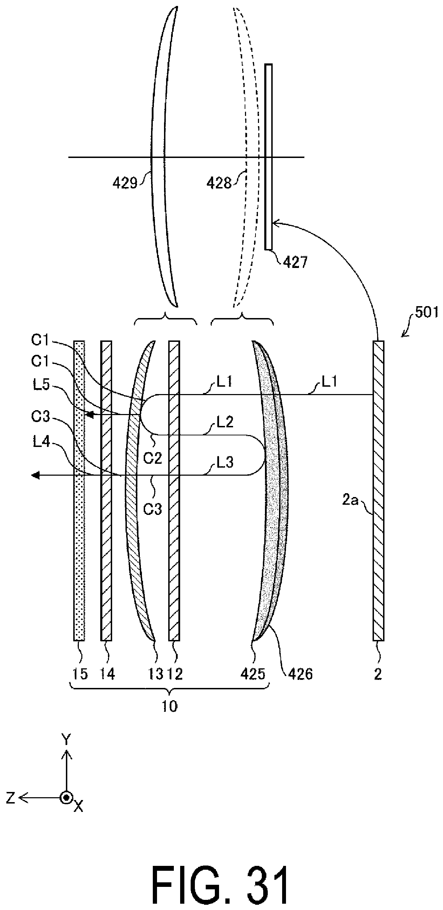

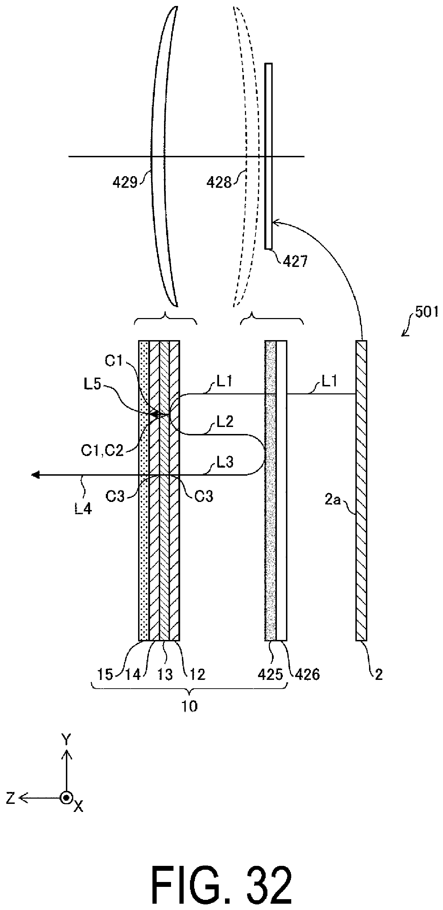

The members of the optical system 3 in each of FIGs. 29 and 30 may correspond to the respective members of the optical system 3 in FIG. 2. The members of the optical system 10 in each of FIGs. 31 and 32 may correspond to the respective members of the optical system 10 in FIG. 4, inclusive of the correspondence relationship between a reflective polarizing plate 425 and the first semi-transmissive mirror 11.

Each of FIGs. 31 and 32 is a cross-sectional view illustrating an example of the configuration of a display device according to an embodiment of the present disclosure. In each of FIGs. 31 and 32, illustration of members not related to the description may be omitted. Description of configurations or parts equivalent to those of the above-described examples may be omitted.

The display device 501 includes the display panel 2 and the optical system 10. The optical system 10 may include the reflective polarizing plate 425, the first retardation plate 12, the second semi-transmissive mirror 13, the second retardation plate 14, and the polarizing plate 15. In the optical system 10, the reflective polarizing plate 425, the first retardation plate 12, the second semi-transmissive mirror 13, the second retardation plate 14, and the polarizing plate 15 may be arranged in this order from the display panel 2 side. The reflective polarizing plate 425 may have substantially the same function as that of the first semi-transmissive mirror 11 (see FIG. 4).

The function of the optical system 10 in each of FIGs. 31 and 32 is the same as the function of the optical system 10 in FIG. 4 from the display light of the first linearly polarized light L1 being transmitted through the reflective polarizing plate 425 having substantially the same function as that of the first semi-transmissive mirror 11 to the light of the fourth linearly polarized light L4 being transmitted through the polarizing plate 15 and emitted to the outside, as well as the light of the fifth linearly polarized light L5 being absorbed by the polarizing plate 15.

In the present embodiment, the reflective polarizing plate 425 can concentrate or converge the light incident on and reflected by the reflective polarizing plate 425. Specifically, the reflective polarizing plate 425 has a concave shape positioned on the opposite side to (user 22 side) the display panel 2. As a result, the reflective polarizing plate 425 can concentrate or converge light. It can also be said that the reflective polarizing plate 425 has a concave shape open on the user 22 side. It can also be said that the reflective polarizing plate 425 has a concave shape recessed toward the display panel 2 side. It can also be said that the reflective polarizing plate 425 has a convex shape protruding toward the display panel 2 side. As illustrated in FIG. 31, the reflective polarizing plate 425 may be arranged on an inner surface of a base member 426 having a concave shape on the user 22 side.

In the present embodiment, the second semi-transmissive mirror 13 can concentrate or converge the light incident on and reflected by the second semi-transmissive mirror 13. Specifically, the second semi-transmissive mirror 13 has a concave shape positioned on the display panel 2 side. As a result, the second semi-transmissive mirror 13 can concentrate or converge light. It can also be said that the second semi-transmissive mirror 13 has a concave shape open on the display panel 2 side. It can also be said that the second semi-transmissive mirror 13 has a concave shape recessed on the opposite side to (user 22 side) to the display panel 2. It can also be said that the second semi-transmissive mirror 13 has a convex shape protruding toward the user 22 side.

As illustrated in FIG. 32, the reflective polarizing plate 425 and/or the second semi-transmissive mirror 13 may have a flat plate shape. In this case, the reflective polarizing plate 425 and/or the second semi-transmissive mirror 13 may be a holographic optical element, or the reflective polarizing plate 425 and/or the second semi-transmissive mirror 13 may have a surface shape having a Fresnel shape. In this case, the reflective polarizing plate 425 may be arranged on the surface of the base member 426 of a flat plate. An example of the material of the base member 426 is glass.

Each of the display panel 2 and the optical system 3 (see FIGs. 29 and 30) and the display panel 2 and the optical system 10 (see FIGs. 31 and 32) may be interpreted as including a display system 427, a concave mirror portion 428, and a concave mirror portion 429. Each of the concave mirror portions 428 and 429 may transmit a part of the incident light and reflect the remaining part. Each of the concave mirror portions 428 and 429 is not limited to a concave mirror itself, and may have a function of an optically concave mirror regardless of the shape.

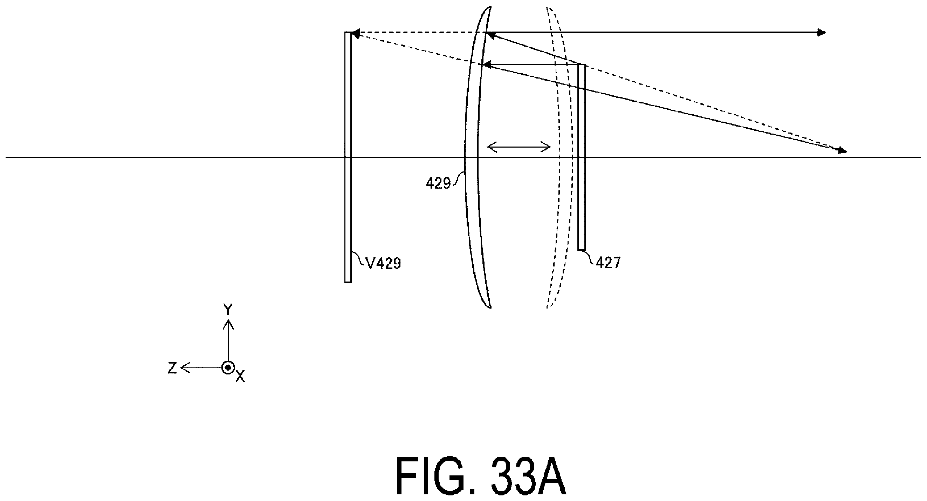

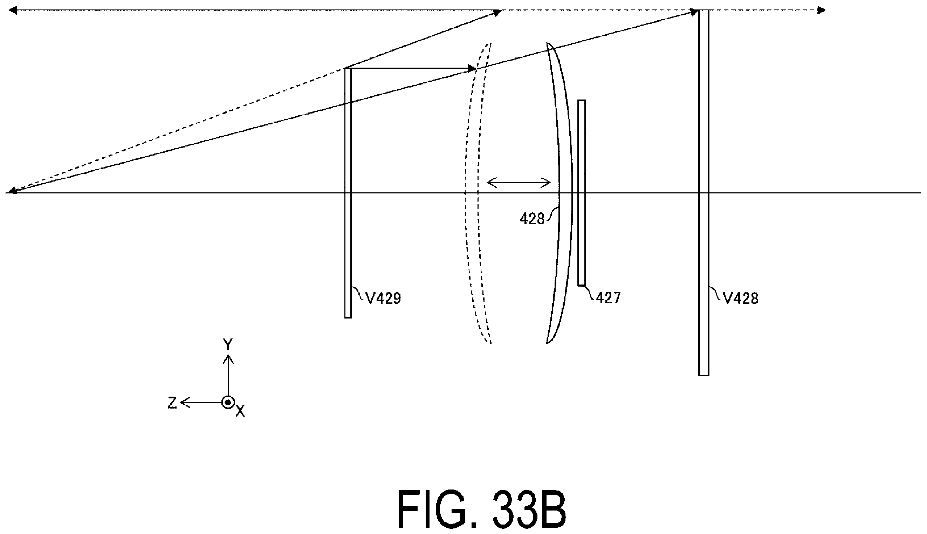

FIGs. 33A and 33B are views describing the optical functions of the display device according to each of FIGs. 29 to 32. As illustrated in FIG. 33A, the concave mirror portion 429 forms an image of the display surface 2a of the display system 427 to form a virtual image V429 enlarged with respect to the display surface 2a. Then, as illustrated in FIG. 33B, the concave mirror portion 428 forms an image of the virtual image V429 to form a virtual image V428 enlarged with respect to the virtual image V429. This makes it easier to adjust the magnification of the virtual image V with respect to the display surface 2a.

According to the display device 501 illustrated in each of FIGs. 29 to 32, the focal length of each of the concave mirror portions 428 and 429 can be lengthened, which is convenient when narrowing the interval between the members. Since the aspect ratio of the Fresnel shape can be set small, molding and vapor deposition are easy. For each of the display panel 2 and the optical system 3 (see FIGs. 29 and 30) and the display panel 2 and the optical system 10 (see FIGs. 31 and 32), two adjacent members may be or need not be in contact with each other at least partially.

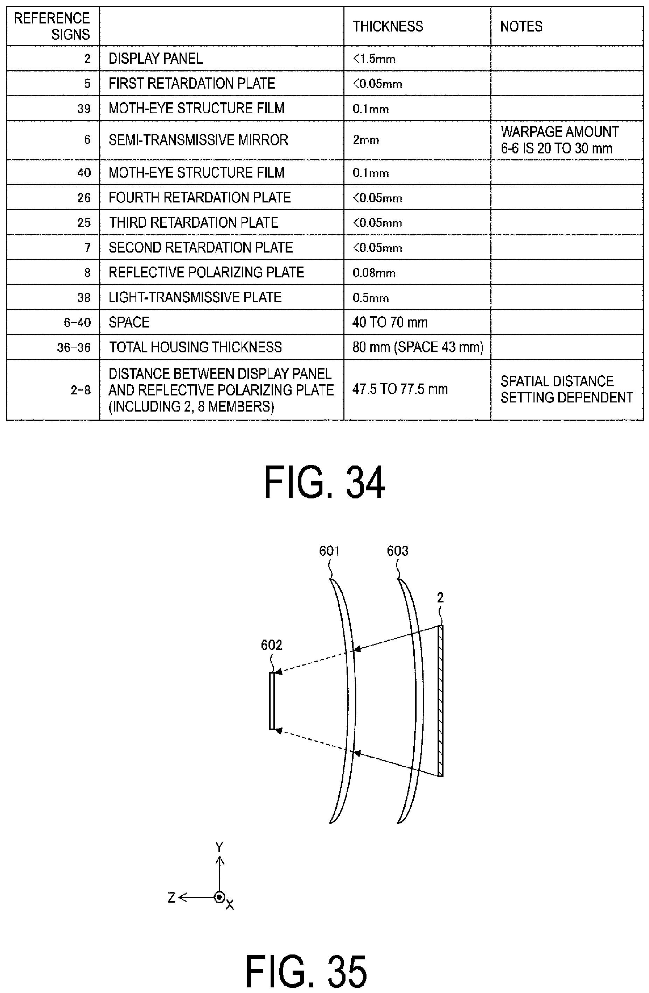

FIG. 34 shows an example of various dimensions of the display device illustrated in FIG. 27. All of the various dimensions in FIG. 34 may be dimensions in the optical axis direction of incident light on the optical system 3 or 10. The inequality sign "<" in FIG. 34 means that it can be less than the stated dimension. The space dimension (reference sign 6-40) may be an interval from a portion of the surface on the emission side of the semi-transmissive mirror 6 that is positioned closest to the display panel 2 to a moth-eye structure film 40. The distance between the display panel and the reflective polarizing plate (including the members 2 and 8) (reference sign 2-8) may be the sum of the thickness of the display panel 2, the separation distance between the display panel 2 and the reflective polarizing plate 8, and the thickness of the reflective polarizing plate 8. The warpage amount (reference sign 6-6) may be a dimension from a portion of the surface on the incident side of the semi-transmissive mirror 6 that is positioned closest to the display panel 2 to a portion of the surface on the emission side of the semi-transmissive mirror 6 that is positioned closest to the second retardation plate 7.

FIG. 35 illustrates a first example in which a first semi-transmissive mirror 601 forms an image of the display light to form a first image 602. The display panel 2 may emit display light. The first semi-transmissive mirror 601 may have a function of reflecting and diffusing light to the display panel 2 side, and form an image of display light to form the first image 602. The first image 602 may be formed on the opposite side to the display panel 2 relative to the first semi-transmissive mirror 601 by reducing the display image of the display panel 2. In the present embodiment, the first semi-transmissive mirror 601 can reflect and diffuse light incident on and reflected by the first semi-transmissive mirror 601. For example, the first semi-transmissive mirror 601 may have a convex shape positioned on the display panel 2 side. As a result, the first semi-transmissive mirror 601 can reflect and diffuse light. It can also be said that the first semi-transmissive mirror 601 has a convex shape protruding toward the display panel 2 side. It can also be said that the first semi-transmissive mirror 601 has a concave shape positioned on the opposite side to (user 22 side) the display panel 2. It can also be said that the first semi-transmissive mirror 601 has a concave shape open on the user 22 side. It can also be said that the first semi-transmissive mirror 601 has a concave shape recessed toward the display panel side. The first semi-transmissive mirror 601 may have a flat plate shape. In this case, the first semi-transmissive mirror 601 may be a holographic optical element or have a surface shape having a Fresnel shape. A focal length f601 of the first semi-transmissive mirror 601 may be longer than a separation distance d60B between the display panel 2 and the first semi-transmissive mirror 601. The focal length f601 of the first semi-transmissive mirror 601 may be shorter than the separation distance d60B between the display panel 2 and the first semi-transmissive mirror 601. The first image 602 may be formed on the opposite side to the display panel 2 relative to the first semi-transmissive mirror 601 by reducing the display image of the display panel 2.

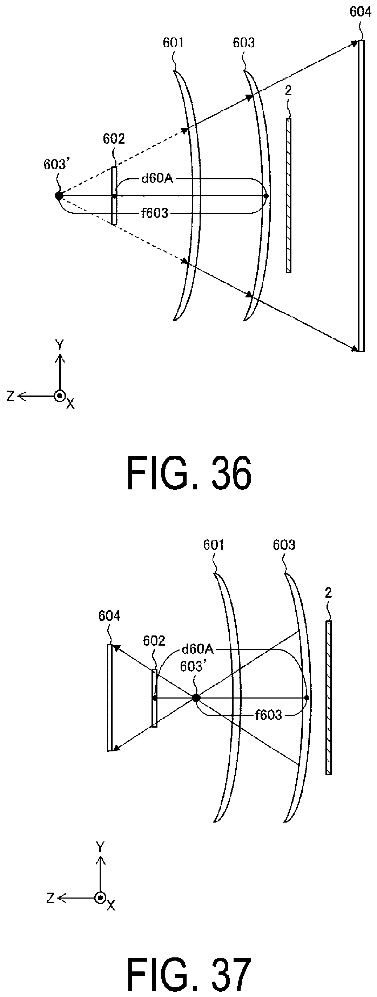

FIG. 36 illustrates a first example in which a second semi-transmissive mirror 603 forms an image of the first image 602 to form a second image 604 in FIG. 35. The second semi-transmissive mirror 603 may have a function of concentrating or converging light on the first image 602 side, and form an image of the first image 602 to form the second image 604. In the present embodiment, the second semi-transmissive mirror 603 can concentrate or converge the light incident on and reflected by the second semi-transmissive mirror 603. For example, the second semi-transmissive mirror 603 has a concave shape positioned on the opposite side to (user 22 side) the display panel 2. As a result, the semi-transmissive mirror 6 can concentrate or converge light. It can also be said that the second semi-transmissive mirror 603 has a concave shape open on the user 22 side. It can also be said that the second semi-transmissive mirror 603 has a concave shape recessed toward the first semi-transmissive mirror 601 side. It can also be said that the second semi-transmissive mirror 603 has a convex shape protruding toward the display panel 2 side. The second semi-transmissive mirror 603 may have a flat plate shape. In this case, the second semi-transmissive mirror 603 may be a holographic optical element or have a surface shape having a Fresnel shape. A focal length f603 of the second semi-transmissive mirror 603 may be longer than a separation distance d60A between the first image 602 and the second semi-transmissive mirror 603. The second image 604 may be a virtual image formed by enlarging the first image 602 on the opposite side to (side of the display panel 2) the first image 602 relative to the second semi-transmissive mirror 603. The focal point of the second semi-transmissive mirror 603 is indicated by reference sign 603'.

The definitions of each of the separation distance d60A and the separation distance d60B will be described. Each of the separation distance d60A and the separation distance d60B may be a distance in a direction parallel to at least one selected from the group consisting of the optical axis of incident light with respect to the first semi-transmissive mirror 601, the optical axis of emitted light with respect to the first semi-transmissive mirror 601, the optical axis of incident light with respect to the second semi-transmissive mirror 603, and the optical axis of emitted light with respect to the second semi-transmissive mirror 603. Each of the separation distance d60A and the separation distance d60B may be a distance in at least one direction selected from the group consisting of the optical axis of the first semi-transmissive mirror 601, the optical axis of the second semi-transmissive mirror 603, the optical axis of the display panel 2 (e.g., the normal direction of the display surface of the display panel 2), and the normal direction of the reflective surface of the optical component (e.g., the first semi-transmissive mirror 601 or the second semi-transmissive mirror 603), or a direction parallel to the at least one direction. Regarding the direction, each of the separation distance d60A and the separation distance d60B may be a distance that can define whether the optical component forms an image to form a real image or a virtual image in comparison with the focal position of the corresponding optical component. Therefore, in each of the separation distance d60A and the separation distance d60B, the start point on the optical component side may be the position of the center of the optical component, and the start point on the image side may be the position of the display surface for the display panel 2, or the image forming position for each of the first image 602 and the second image 604.

FIG. 37 illustrates a second example in which the second semi-transmissive mirror 603 forms an image of the first image 602 to form the second image 604 in FIG. 35. The second semi-transmissive mirror 603 may have a function of concentrating or converging light on the first image 602 side, and form an image of the first image 602 to form the second image 604. The focal length f603 of the second semi-transmissive mirror 603 may be shorter than the separation distance d60A between the first image 602 and the second semi-transmissive mirror 603. The second image 604 may be a real image formed by enlarging or reducing the first image 602 on the side of first image 602 (on the opposite side to the display panel 2) with respect to the second semi-transmissive mirror 603. The second image 604 may be inverted with respect to the first image 602.

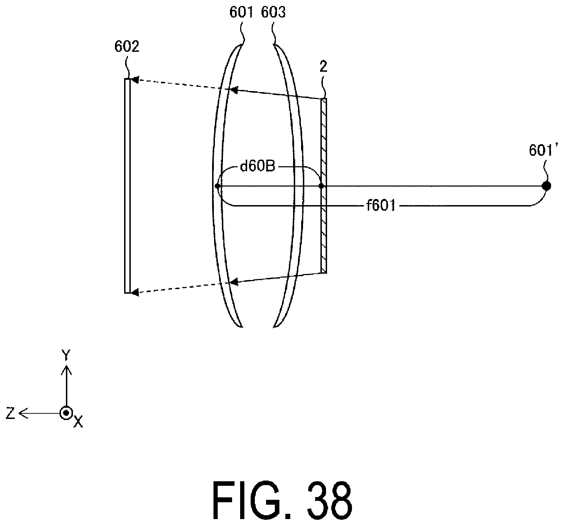

FIG. 38 illustrates a second example in which the first semi-transmissive mirror 601 forms an image of display light to form the first image 602. The display panel 2 may emit display light. The first semi-transmissive mirror 601 may have a function of concentrating or converging light on the display panel 2 side, and form an image of the display light to form the first image 602. In the present embodiment, the first semi-transmissive mirror 601 can concentrate or converge the light incident on and reflected by the first semi-transmissive mirror 601. For example, the first semi-transmissive mirror 601 may have a concave shape positioned on the display panel 2 side. As a result, the first semi-transmissive mirror 601 can concentrate or converge light. It can also be said that the first semi-transmissive mirror 601 has a concave shape positioned on the display panel 2 side. It can also be said that the first semi-transmissive mirror 601 has a convex shape protruding on the opposite side to the display panel 2 (user 22 side). It can also be said that the first semi-transmissive mirror 601 has a concave shape open on the display panel 2 side. It can also be said that the first semi-transmissive mirror 601 has a concave shape recessed on the opposite side to (user 22 side) the display panel 2. The first semi-transmissive mirror 601 may have a flat plate shape. In this case, the first semi-transmissive mirror 601 may be a holographic optical element or have a surface shape having a Fresnel shape. The focal length f601 of the first semi-transmissive mirror 601 may be longer than the separation distance d60B between the display panel 2 and the first semi-transmissive mirror 601. The first image 602 may be formed on the opposite side to the display panel 2 relative to the first semi-transmissive mirror 601 by enlarging the display image of the display panel 2. The focal point of the first semi-transmissive mirror 601 is indicated by reference sign 601'.

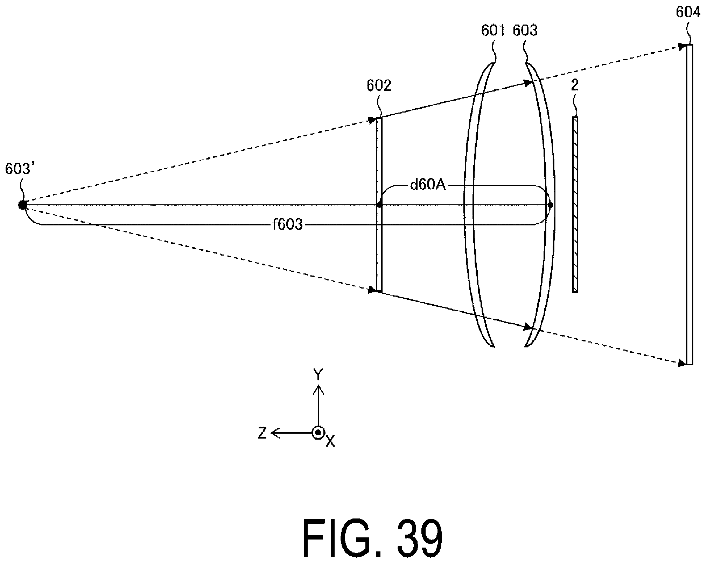

FIG. 39 illustrates a first example in which a second semi-transmissive mirror 603 forms an image of the first image 602 to form the second image 604 in FIG. 38. The second semi-transmissive mirror 603 may have a function of concentrating or converging light on the first image 602 side, and form an image of the first image 602 to form the second image 604. In the present embodiment, the second semi-transmissive mirror 603 can concentrate or converge the light incident on and reflected by the second semi-transmissive mirror 603. For example, the second semi-transmissive mirror 603 has a concave shape positioned on the opposite side to (user 22 side) the display panel 2. As a result, the semi-transmissive mirror 6 can concentrate or converge light. It can also be said that the second semi-transmissive mirror 603 has a concave shape open on the user 22 side. It can also be said that the second semi-transmissive mirror 603 has a concave shape recessed toward the first semi-transmissive mirror 601 side. It can also be said that the second semi-transmissive mirror 603 has a convex shape protruding toward the display panel 2 side. The second semi-transmissive mirror 603 may have a flat plate shape. In this case, the second semi-transmissive mirror 603 may be a holographic optical element or have a surface shape having a Fresnel shape. The focal length f603 of the second semi-transmissive mirror 603 may be longer than the separation distance d60A between the first image 602 and the second semi-transmissive mirror 603. The second image 604 may be a virtual image formed by enlarging the first image 602 on the opposite side to (side of the display panel 2) the first image 602 relative to the second semi-transmissive mirror 603.

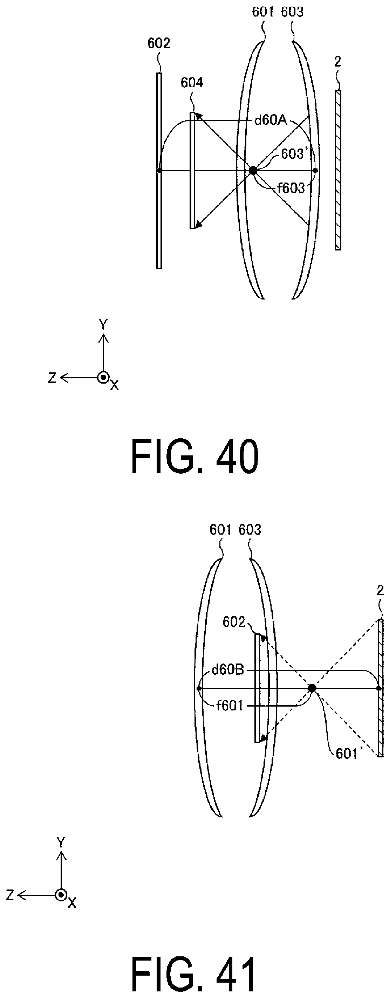

FIG. 40 illustrates a second example in which the second semi-transmissive mirror 603 forms an image of the first image 602 to form the second image 604 in FIG. 38. The second semi-transmissive mirror 603 may have a function of concentrating or converging light on the first image 602 side, and form an image of the first image 602 to form the second image 604. In the present embodiment, the second semi-transmissive mirror 603 can concentrate or converge the light incident on and reflected by the second semi-transmissive mirror 603. For example, the second semi-transmissive mirror 603 has a concave shape positioned on the opposite side to (user 22 side) the display panel 2. As a result, the semi-transmissive mirror 6 can concentrate or converge light. It can also be said that the second semi-transmissive mirror 603 has a concave shape open on the user 22 side. It can also be said that the second semi-transmissive mirror 603 has a concave shape recessed toward the first semi-transmissive mirror 601 side. It can also be said that the second semi-transmissive mirror 603 has a convex shape protruding toward the display panel 2 side. The second semi-transmissive mirror 603 may have a flat plate shape. In this case, the second semi-transmissive mirror 603 may be a holographic optical element or have a surface shape having a Fresnel shape. The focal length f603 of the second semi-transmissive mirror 603 may be shorter than the separation distance d60A between the first image 602 and the second semi-transmissive mirror 603. The second image 604 may be a real image formed by enlarging or reducing the first image 602 on the side of first image 602 (on the opposite side to the display panel 2) with respect to the second semi-transmissive mirror 603. The second image 604 may be inverted with respect to the first image 602.

FIG. 41 illustrates a third example in which the first semi-transmissive mirror 601 forms an image of display light to form the first image 602. The display panel 2 may emit display light. The first semi-transmissive mirror 601 may have a function of concentrating or converging light on the display panel 2 side, and form an image of the display light to form the first image 602. In the present embodiment, the first semi-transmissive mirror 601 can concentrate or converge the light incident on and reflected by the first semi-transmissive mirror 601. For example, the first semi-transmissive mirror 601 may have a concave shape positioned on the display panel 2 side. As a result, the first semi-transmissive mirror 601 can concentrate or converge light. It can also be said that the first semi-transmissive mirror 601 has a concave shape positioned on the display panel 2 side. It can also be said that the first semi-transmissive mirror 601 has a convex shape protruding on the opposite side to the display panel 2 (user 22 side). It can also be said that the first semi-transmissive mirror 601 has a concave shape open on the display panel 2 side. It can also be said that the first semi-transmissive mirror 601 has a concave shape recessed on the opposite side to (user 22 side) to the display panel 2. The first semi-transmissive mirror 601 may have a flat plate shape. In this case, the first semi-transmissive mirror 601 may be a holographic optical element or have a surface shape having a Fresnel shape. The focal length f601 of the first semi-transmissive mirror 601 may be shorter than the separation distance d60B between the display panel 2 and the first semi-transmissive mirror 601. The first image 602 may be formed by enlarging or reducing the display image of the display panel 2 on the side of the display panel 2 with respect to the first semi-transmissive mirror 601. The first image 602 may be inverted with respect to the display image of the display panel 2.

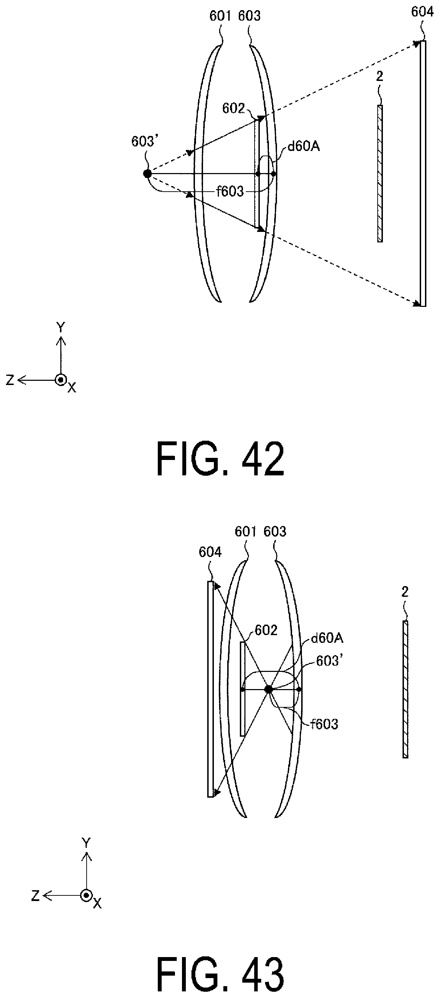

FIG. 42 illustrates a first example in which a second semi-transmissive mirror 603 forms an image of the first image 602 to form the second image 604 in FIG. 41. The second semi-transmissive mirror 603 may have a function of concentrating or converging light on the first image 602 side, and form an image of the first image 602 to form the second image 604. In the present embodiment, the second semi-transmissive mirror 603 can concentrate or converge the light incident on and reflected by the second semi-transmissive mirror 603. For example, the second semi-transmissive mirror 603 has a concave shape positioned on the opposite side to (user 22 side) the display panel 2. As a result, the semi-transmissive mirror 6 can concentrate or converge light. It can also be said that the second semi-transmissive mirror 603 has a concave shape open on the user 22 side. It can also be said that the second semi-transmissive mirror 603 has a concave shape recessed toward the first semi-transmissive mirror 601 side. It can also be said that the second semi-transmissive mirror 603 has a convex shape protruding toward the display panel 2 side. The second semi-transmissive mirror 603 may have a flat plate shape. In this case, the second semi-transmissive mirror 603 may be a holographic optical element or have a surface shape having a Fresnel shape. The first image 602 may be positioned on the opposite side to the display panel 2 relative to the second semi-transmissive mirror 603. The focal length f603 of the second semi-transmissive mirror 603 may be longer than the separation distance d60A between the first image 602 and the second semi-transmissive mirror 603. The second image 604 may be a virtual image formed by enlarging the first image 602 on the opposite side to (side of the display panel 2) the first image 602 relative to the second semi-transmissive mirror 603.

FIG. 43 illustrates a second example in which the second semi-transmissive mirror 603 forms an image of the first image 602 to form the second image 604 in FIG. 41. The second semi-transmissive mirror 603 may have a function of concentrating or converging light on the first image 602 side, and form an image of the first image 602 to form the second image 604. In the present embodiment, the second semi-transmissive mirror 603 can concentrate or converge the light incident on and reflected by the second semi-transmissive mirror 603. For example, the second semi-transmissive mirror 603 has a concave shape positioned on the opposite side to (user 22 side) the display panel 2. As a result, the semi-transmissive mirror 6 can concentrate or converge light. It can also be said that the second semi-transmissive mirror 603 has a concave shape open on the user 22 side. It can also be said that the second semi-transmissive mirror 603 has a concave shape recessed toward the first semi-transmissive mirror 601 side. It can also be said that the second semi-transmissive mirror 603 has a convex shape protruding toward the display panel 2 side. The second semi-transmissive mirror 603 may have a flat plate shape. In this case, the second semi-transmissive mirror 603 may be a holographic optical element or have a surface shape having a Fresnel shape. The first image 602 may be positioned on the opposite side to the display panel 2 relative to the second semi-transmissive mirror 603. The focal length f603 of the second semi-transmissive mirror 603 may be shorter than the separation distance d60A between the first image 602 and the second semi-transmissive mirror 603. The second image 604 may be a real image formed by enlarging or reducing the first image 602 on the side of first image 602 (on the opposite side to the display panel 2) with respect to the second semi-transmissive mirror 603. The second image 604 may be inverted with respect to the first image 602, in other words, may be erected with respect to the display image of the display panel 2.

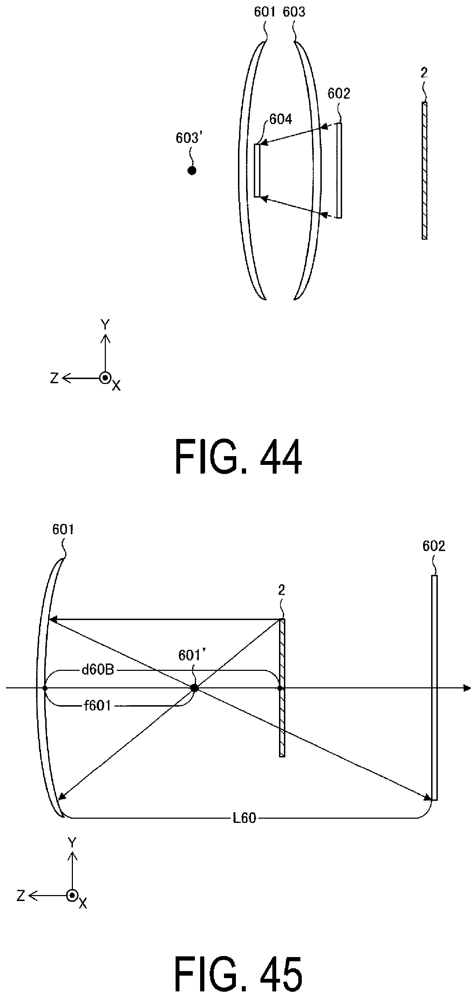

FIG. 44 illustrates a third example in which the second semi-transmissive mirror 603 forms an image of the first image 602 to form the second image 604 in FIG. 41. The display panel 2 may emit display light. The first semi-transmissive mirror 601 may have a function of concentrating or converging light on the display panel 2 side, and form an image of the display light to form the first image 602. In the present embodiment, the first semi-transmissive mirror 601 can concentrate or converge the light incident on and reflected by the first semi-transmissive mirror 601. For example, the first semi-transmissive mirror 601 may have a concave shape positioned on the display panel 2 side. As a result, the first semi-transmissive mirror 601 can concentrate or converge light. It can also be said that the first semi-transmissive mirror 601 has a concave shape positioned on the display panel 2 side. It can also be said that the first semi-transmissive mirror 601 has a convex shape protruding on the opposite side to the display panel 2 (user 22 side). It can also be said that the first semi-transmissive mirror 601 has a concave shape open on the display panel 2 side. It can also be said that the first semi-transmissive mirror 601 has a concave shape recessed on the opposite side to (user 22 side) the display panel 2. The first semi-transmissive mirror 601 may have a flat plate shape. In this case, the first semi-transmissive mirror 601 may be a holographic optical element or have a surface shape having a Fresnel shape. The second semi-transmissive mirror 603 may have a function of concentrating or converging light on the opposite side to the first image 602, and form an image of the first image 602 to form the second image 604. In the present embodiment, the second semi-transmissive mirror 603 can concentrate or converge the light incident on and reflected by the second semi-transmissive mirror 603. For example, the second semi-transmissive mirror 603 has a concave shape positioned on the opposite side to (user 22 side) the display panel 2. As a result, the semi-transmissive mirror 6 can concentrate or converge light. It can also be said that the second semi-transmissive mirror 603 has a concave shape open on the user 22 side. It can also be said that the second semi-transmissive mirror 603 has a concave shape recessed toward the first semi-transmissive mirror 601 side. It can also be said that the second semi-transmissive mirror 603 has a convex shape protruding toward the display panel 2 side. The second semi-transmissive mirror 603 may have a flat plate shape. In this case, the second semi-transmissive mirror 603 may be a holographic optical element or have a surface shape having a Fresnel shape. The focal length f601 of the first semi-transmissive mirror 601 may be shorter than the separation distance d60B between the display panel 2 and the first semi-transmissive mirror 601 (see FIG. 41). The first image 602 may be positioned on the display panel 2 side with respect to the second semi-transmissive mirror 603. The second image 604 may be a real image formed by reducing the first image 602 on the opposite side to (the on the opposite side to side of the display panel 2) the first image 602 with respect to the second semi-transmissive mirror 603. The first image 602 may be inverted with respect to the display image of the display panel 2. The second image 604 may be erected with respect to the first image 602, in other words, may be inverted with respect to the display image of the display panel 2.

FIG. 45 is a view describing a condition according to the example of FIG. 43 and a condition according to the example of FIG. 44. (X) may be established with respect to the focal length f601, the separation distance d60B, and a separation distance L60 between the first semi-transmissive mirror 601 and the first image 602.

$$L60:d60B = f601:(d60B - f601), \text{ i.e., } L60 = d60B \times f601/(d60B - f601)\ldots(X)$$

In (X), when the separation distance L60 is longer than a separation distance d60 between the first semi-transmissive mirror 601 and the second semi-transmissive mirror 603, that is, $d60B \times f601/(d60B - f601) > d60$, it may correspond to the example of FIG. 44. In (X), when the separation distance L60 is shorter than the separation distance d60, that is, $d60B \times f601/(d60B - f601) < d60$, it may correspond to the example of FIG. 43.

In each example of FIGs. 35 to 44, the focal length f603 of the second semi-transmissive mirror 603 may be longer than the focal length f601 of the first semi-transmissive mirror 601. In each example of FIGs. 35 to 44, the focal length f603 of the second semi-transmissive mirror 603 may be shorter than the focal length f601 of the first semi-transmissive mirror 601.

By applying the example related to any of FIGs. 36, 37, 39, 40, and 42 to 44 to the display device 1, the display device 1 can be reduced in size with respect to the size of the image by combining two semi-transmissive mirrors to form an image to be viewed by the user 22. In each example of FIGs. 35 to 44, the first semi-transmissive mirror 601 and the second semi-transmissive mirror 603 may transmit a part of the incident light and reflect the remaining part. For example, the first semi-transmissive mirror 601 and the second semi-transmissive mirror 603 may transmit a part (e.g., approximately 50%) of the incident light and reflect the remaining part (e.g., approximately 50%), or may impart a function of reflection polarization. The transmittance and the reflectance of light incident on the first semi-transmissive mirror 601 or the second semi-transmissive mirror 603 are not limited to 50%. That is, for example, the reflective polarizing plate 8 described in the present description may be regarded as the first semi-transmissive mirror 601, and the semi-transmissive mirror 6 may be regarded as the second semi-transmissive mirror 603. For example, the second semi-transmissive mirror 13 or 13' described in the present description may be regarded as the first semi-transmissive mirror 601, and the first semi-transmissive mirror 11 may be regarded as the second semi-transmissive mirror 603.

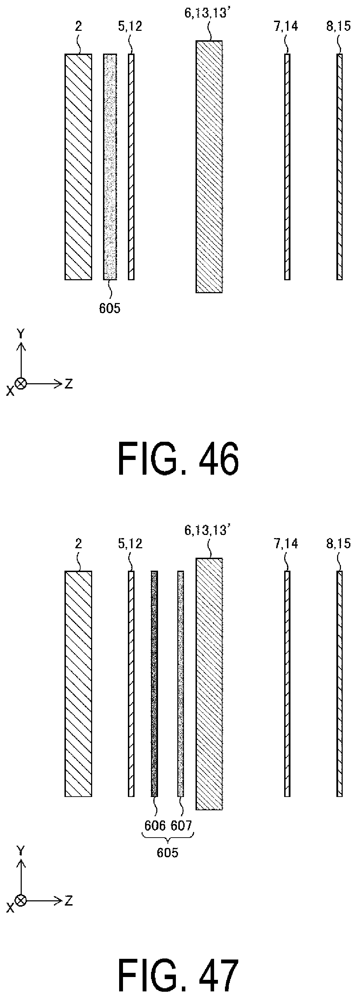

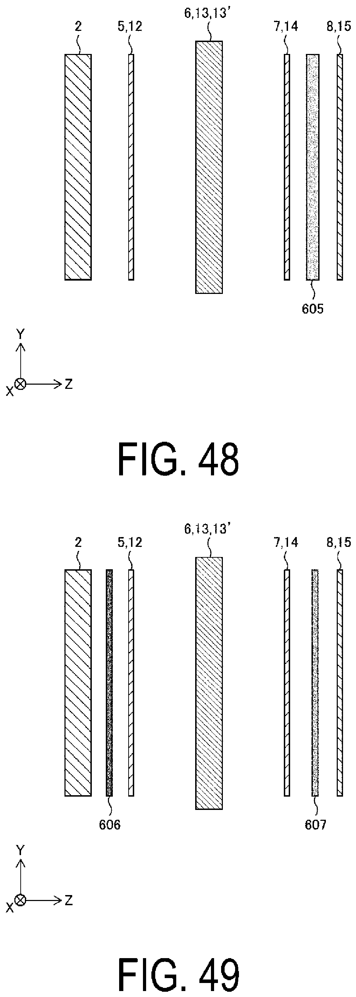

Each of FIGs. 46 to 48 illustrates an arrangement example of a retardation member 605. FIG. 49 illustrates an arrangement example of a third retardation plate 606 and a fourth retardation plate 607.

The display device 1 may include the display panel 2 that emits display light, the first retardation plate 5, the second retardation plate 7 arranged apart from the first retardation plate 5, the semi-transmissive mirror 6 arranged between the first retardation plate 5 and the second retardation plate 7 and including a reflective surface capable of reflecting light toward the second retardation plate 7, and the reflective polarizing plate 8 arranged on the opposite side to the first retardation plate 5 relative to the second retardation plate 7 and transmitting first linearly polarized light to reflect second linearly polarized light.

In the example illustrated in FIG. 46, the display device 1 may include the retardation member 605 arranged between the display panel 2 and the first retardation plate 5 and arranged, allowing the optical axis to be substantially parallel or substantially perpendicular to the transmission axis of the reflective polarizing plate 8. In the example illustrated in FIG. 46, the first retardation plate 5 and the second retardation plate 7 may convert the display light into the second linearly polarized light, and the second retardation plate 7 may convert the second linearly polarized light into the first linearly polarized light before the second linearly polarized light reflected by the reflective polarizing plate 8 is reflected by the semi-transmissive mirror 6 to be incident on the reflective polarizing plate 8 again.

In the example illustrated in FIG. 47, the display device 1 may include the retardation member 605 arranged between the first retardation plate 5 and the second retardation plate 7 and arranged, allowing the optical axis to be substantially parallel or substantially perpendicular to the transmission axis of the reflective polarizing plate 8. In the example illustrated in FIG. 47, the retardation member 605 may include two retardation plates (third retardation plate 606 and the fourth retardation plate 607) having the same phase difference provided to transmitted light. In that case, the optical axis of the third retardation plate 606 may be substantially perpendicular to the optical axis of the fourth retardation plate 607. In the example illustrated in FIG. 47, the first retardation plate 5 and the second retardation plate 7 may convert the display light into the second linearly polarized light, and the second retardation plate 7 may convert the second linearly polarized light into the first linearly polarized light before the second linearly polarized light reflected by the reflective polarizing plate 8 is reflected by the semi-transmissive mirror 6 to be incident on the reflective polarizing plate 8 again. In the example illustrated in FIG. 47, the retardation member 605 includes the third retardation plate 606 and the fourth retardation plate 607, but no such limitation is intended. For example, in the example illustrated in FIG. 47, the retardation member 605 may include one retardation plate (third retardation plate 606 or fourth retardation plate 607). In this case, the one retardation plate (third retardation plate 606 or fourth retardation plate 607) may be a half-wavelength plate. In this case, one retardation plate (third retardation plate 606 or fourth retardation plate 607) may be positioned between the first retardation plate 5 and the semi-transmissive mirror 6, or may be positioned between the semi-transmissive mirror 6 and the second retardation plate 7. In this case, when the reflective polarizing plate 8 reflects polarized light having a polarization axis perpendicular to the polarization axis of the display light and transmits polarized light having a polarization axis parallel to the polarization axis of the display light, the positional relationship between the first retardation plate 5 and the second retardation plate 7 may be defined with the slow axis of the second retardation plate 7 being orthogonal to the slow axis of the first retardation plate 5 when the first retardation plate 5 and the second retardation plate 7 are viewed along the Z axis direction. In this case, when the reflective polarizing plate 8 transmits polarized light having a polarization axis perpendicular to the polarization axis of the display light and reflects polarized light having a polarization axis parallel to the polarization axis of the display light, the positional relationship between the first retardation plate 5 and the second retardation plate 7 may be defined with the slow axis of the second retardation plate 7 and the slow axis of the first retardation plate 5 being parallel when the first retardation plate 5 and the second retardation plate 7 are visually recognized along the Z axis direction.

In the example illustrated in FIG. 48, the display device 1 may include the retardation member 605 arranged between the second retardation plate 7 and the reflective polarizing plate 8 and arranged, allowing the optical axis to be substantially parallel or substantially perpendicular to the transmission axis of the reflective polarizing plate 8. In the example illustrated in FIG. 48, the first retardation plate 5 and the second retardation plate 7 may convert the display light into the second linearly polarized light, and the second retardation plate 7 may convert the second linearly polarized light into the first linearly polarized light before the second linearly polarized light reflected by the reflective polarizing plate 8 is reflected by the semi-transmissive mirror 6 to be incident on the reflective polarizing plate 8 again.

In the example illustrated in FIG. 49, the display device 1 may include the third retardation plate 606 arranged between the display panel 2 and the first retardation plate 5 and arranged, allowing the optical axis to be substantially parallel or substantially perpendicular to the transmission axis of the reflective polarizing plate 8, and the fourth retardation plate 607 arranged between second retardation plate 7 and the reflective polarizing plate 8 and arranged, allowing the optical axis to be substantially parallel or substantially perpendicular to the transmission axis of the reflective polarizing plate 8. In the example illustrated in FIG. 49, the first retardation plate 5 and the second retardation plate 7 may convert the display light into the second linearly polarized light, and the second retardation plate 7 may convert the second linearly polarized light into the first linearly polarized light before the second linearly polarized light reflected by the reflective polarizing plate 8 is reflected by the semi-transmissive mirror 6 to be incident on the reflective polarizing plate 8 again.

The retardation member 605 may include one retardation plate (third retardation plate 606 or fourth retardation plate 607). The retardation member 605 may include two retardation plates (third retardation plate 606 and the fourth retardation plate 607). In that case, the third retardation plate 606 and the fourth retardation plate 607 may have the optical axes thereof substantially parallel or substantially perpendicular to the transmission axis of the reflective polarizing plate, and the optical axis of the third retardation plate 606 may be substantially perpendicular to the optical axis of the fourth retardation plate 607. The retardation member 605 may include two retardation plates (third retardation plate 606 and the fourth retardation plate 607) having the same phase difference provided to transmitted light. Examples of each of the third retardation plate 606 and the fourth retardation plate 607 include a half-wavelength plate, a quarter-wavelength plate, and a one-eighth-wavelength plate. The retardation member 605 may include a film (retardation plate) having a relationship of index of refraction nx = index of refraction ny > index of refraction nz, which is called a negative c-plate or the like. The retardation member 605 may include a film (retardation plate) having a relationship of index of refraction nx = index of refraction ny < index of refraction nz, which is called a positive c-plate or the like. The retardation member 605 may include a film (retardation plate) called a biaxial retardation plate in which the index of refraction nx, the index of refraction ny, and the index of refraction nz are different. The index of refraction nx and the index of refraction ny are indices of refraction in a direction of a film in-plane, an x direction corresponding to the index of refraction nx and a y direction corresponding to the index of refraction ny are orthogonal to each other, and the index of refraction nz may be an index of refraction in the z direction perpendicular to a film plane. When the retardation member 605 includes two retardation plates (third retardation plate 606 and the fourth retardation plate 607) having the same phase difference provided to transmitted light, and the optical axis of the third retardation plate 606 is substantially perpendicular to the optical axis of the fourth retardation plate 607, the retardation member 605 may be replaced by a film (retardation plate) in which the index of refraction nx and the index of refraction ny are same and having the index of refraction nz different from the index of refraction nx and the index of refraction ny. In other words, the retardation member 605 may be replaced by a film (retardation plate) having a relationship of index of refraction nx = index of refraction ny > index of refraction nz or index of refraction nx = index of refraction ny < index of refraction nz. In this case, the orientation in the x direction corresponding to the index of refraction nx with respect to the transmission axis of the reflective polarizing plate and the orientation in the y direction corresponding to the index of refraction ny with respect to the transmission axis of the reflective polarizing plate are not particularly limited. The x direction corresponding to the index of refraction nx and/or the y direction corresponding to the index of refraction ny in this case may be substantially parallel or substantially perpendicular to the transmission axis of the reflective polarizing plate. The retardation member 605 may include two retardation plates (third retardation plate 606 and the fourth retardation plate 607) having different phase differences provided to transmitted light. The retardation member 605 may include the biaxial retardation plate. When the retardation member 605 may include two retardation plates (third retardation plate 606 and the fourth retardation plate 607) having different phase differences provided to transmitted light, and the optical axis of the third retardation plate 606 is substantially perpendicular to the optical axis of the fourth retardation plate 607, the retardation member 605 may be replaced by a biaxial retardation plate in which the index of refraction nx, the index of refraction ny, and the index of refraction nz are different. The x direction corresponding to the index of refraction nx and/or the y direction corresponding to the index of refraction ny in this case may be substantially parallel or substantially perpendicular to the transmission axis of the reflective polarizing plate. The relationship among the index of refraction nx, the index of refraction ny, and the index of refraction nz in this case may be any one of index of refraction nx > index of refraction ny > index of refraction nz, index of refraction ny > index of refraction nx > index of refraction nz, index of refraction nx > index of refraction nz > index of refraction ny, index of refraction ny > index of refraction nz > index of refraction nx, index of refraction nz > index of refraction nx > index of refraction ny, and index of refraction nz > index of refraction ny > index of refraction nx.

Regarding a general method for producing a retardation plate, by pulling a film in one axis direction, the pulled direction may have a higher index of refraction and become a slow axis of the retardation plate. Regarding a method for producing a negative c-plate, by uniformly pulling a film in two perpendicular axes (in-plane x direction and y direction), the pulled x axis and y axis may have a high index of refraction and the z axis may have a low index of refraction. Regarding a method for producing a biaxial retardation plate, by pulling the film with a difference between in two perpendicular axes (in-plane x direction and y direction), the pulled x axis and y axis may have a high index of refraction, but a difference in index of refraction may occur therebetween.

In the example illustrated in FIG. 47, the third retardation plate 606 and the fourth retardation plate 607 are positioned between the first retardation plate 5 and the semi-transmissive mirror 6, but no such limitation is intended. In the example illustrated in FIG. 47, the third retardation plate 606 and/or the fourth retardation plate 607 may be positioned between the semi-transmissive mirror 6 and the second retardation plate 7. That is, in the example illustrated in FIG. 47, one of the third retardation plate 606 and the fourth retardation plate 607 may be positioned between the first retardation plate 5 and the semi-transmissive mirror 6, and the other may be positioned between the semi-transmissive mirror 6 and the second retardation plate 7. The third retardation plate 606 and the fourth retardation plate 607 may be positioned between the semi-transmissive mirror 6 and the second retardation plate 7. In the example illustrated in FIG. 47, the positional relationship of each of the third retardation plate 606 and the fourth retardation plate 607 with respect to the semi-transmissive mirror 6 is not particularly limited. One of the third retardation plate 606 and the fourth retardation plate 607 may be positioned between the first retardation plate 5 and the semi-transmissive mirror 6 or between the semi-transmissive mirror 6 and the second retardation plate 7, and the other may be positioned between the display panel 2 and the first retardation plate 5 or between the second retardation plate 7 and the reflective polarizing plate 8.

For the third retardation plate and the fourth retardation plate described in the present description, the third retardation plate may be replaced with the fourth retardation plate, or the fourth retardation plate may be replaced with the third retardation plate.

The first linearly polarized light and the second linearly polarized light may have polarization characteristics to be paired with each other, or may have common polarization characteristics. One of the first linearly polarized light and the second linearly polarized light may be P-polarized light, and the other may be S-polarized light.

By applying the example related to any of FIGs. 46 to 49 to the display device 1, even when the user 22 is not positioned in front of the display device 1, the relative angle between the transmission axis of the front polarizing plate of the display panel 2 and the transmission axis of the reflective polarizing plate 8 can be made close to the crossed Nicol arrangement, and deterioration of the display quality of the display device 1 can be reduced.

If the first retardation plate 12 is arranged in place of the first retardation plate 5, the second semi-transmissive mirror 13 is arranged in place of the semi-transmissive mirror 6, the second retardation plate 14 is arranged in place of the second retardation plate 7, and the polarizing plate 15 is arranged in place of the reflective polarizing plate 8, the example related to any of FIGs. 46 to 49 can also be applied to the display device 1A. By applying the example related to any of FIGs. 46 to 49 to the display device 1A, even when the user 22 is not positioned in front of the display device 1A, the relative angle between the transmission axis of the front polarizing plate of the display panel 2 and the transmission axis of the polarizing plate 15 can be made close to the crossed Nicol arrangement, and deterioration of the display quality of the display device 1' can be reduced.

If the first retardation plate 12 is arranged in place of the first retardation plate 5, the second semi-transmissive mirror 13' is arranged in place of the semi-transmissive mirror 6, the second retardation plate 14 is arranged in place of the second retardation plate 7, and the polarizing plate 15 is arranged in place of the reflective polarizing plate 8, the example related to any of FIGs. 46 to 49 can also be applied to the display device 1A'. By applying the example related to any of FIGs. 46 to 49 to the display device 1A', even when the user 22 is not positioned in front of the display device 1A', the relative angle between the transmission axis of the front polarizing plate of the display panel 2 and the transmission axis of the polarizing plate 15 can be made close to the crossed Nicol arrangement, and deterioration of the display quality of the display device 1A' can be reduced.

Although the embodiments of the present disclosure have been described in detail above, the present disclosure is not limited to the above-described embodiments.

For example, although the display device including the display panel is described above, no such limitation is intended. For example, in the present disclosure, a device not including a display panel may include an optical system. For example, the housing of the display device may include a display panel installation portion. The display panel installation portion may be capable of installing a display panel. The display panel installation portion may be positioned on a part of a wall surface of the housing or may be positioned inside the housing. In this case, the display panel may be positioned inside the housing. The display panel installation portion may be positioned outside the housing. That is, the display panel may be positioned outside the housing. In this case, the housing may include an opening in which a part of the wall surface is cut out. The display panel installation portion may be arranged with respect to the housing, allowing the display light emitted from the display panel installed in the display panel installation portion to be guided inside the housing via the opening. The display panel installation portion may be connected to an outer wall of the housing, or may be connected to the outer wall of the housing, allowing at least a part of the opening to be closed. A member having translucency may be arranged in the opening, and the member may be, for example, glass, resin, or the like. For example, FIG. 10 illustrates a display device in which a display panel is installed in the display panel installation portion, but the display device may be a device in which the display panel is not installed in the display panel installation portion. In this case, the device may be a display panel housing device including a housing including a viewport, an optical system, and a display panel installation portion on which the display panel is installable. Also in the display panel housing device, the configuration of the display device of each of the above-described embodiments may be realized. That is, in the display panel housing device, the position of the display panel installation portion may be defined, allowing the configuration of each of the above-described embodiments to be realized when the display panel is installed in the display panel installation portion. The housing of the display panel housing device may include an opening, and the display panel may be insertable from the opening. In this case, the display panel housing device may have the same configuration as that of the display device except that the housing includes an opening and the display panel is insertable from the outside.

The display device of the present disclosure can be installed in the first housing including the first viewport, and may include the second housing including the second viewport. The display device of the present disclosure may include the first housing including the first viewport and the second housing installed in the first housing and including the second viewport. The display device of the present disclosure may include the display panel for emitting display light, the display panel being positioned in the second housing and having a display surface having a planar shape arranged to face the first viewport and the second viewport. The display device of the present disclosure may include an optical system that is positioned in the second housing and forms an image of display light. The first viewport may function, allowing the inside of the first housing to be visually recognized from the outside of the first housing. The second viewport may function, allowing the inside of the second housing to be visually recognized from the outside of the second housing. The first housing may include a first window (opening) that transmits the light emitted from the optical system. The first window (opening) may function as the first viewport. The first housing may include a member that enables the inside of the first housing arranged in the first window (opening) to be visually recognized from the outside of the first housing. The first housing may include a member that is arranged in the first window (opening) and transmits at least a part of the light emitted from the display panel. The first housing may include a light-transmissive plate arranged in the first window (opening). The light-transmissive plate may transmit the light emitted from the optical system. The light-transmissive plate may at least partially close the window (opening). The light-transmissive plate may be made of, for example, glass, resin, or the like. The member (e.g., the light-transmissive plate or at least one member of the optical system) that enables the inside of the housing arranged in the first window (opening) to be visually recognized from the outside of the housing may function as a first viewport. The member (e.g., a light-transmissive plate) that is arranged in the first window (opening) and transmits the light emitted from the optical system may function as the first viewport. The second housing may include a second window (opening) that transmits the light emitted from the optical system. The second window (opening) may function as the second viewport. The second housing may include a member that enables the inside of the second housing arranged in the second window (opening) to be visually recognized from the outside of the second housing. The second housing may include a member that is arranged in the second window (opening) and transmits at least a part of the light emitted from the display panel. The second housing may include a light-transmissive plate arranged in the second window (opening). The light-transmissive plate may transmit the light emitted from the optical system. The light-transmissive plate may at least partially close the second window (opening). The light-transmissive plate may be made of, for example, glass, resin, or the like. At least one member (e.g., a polarizing plate such as a reflective polarizing plate or an absorption polarizing plate, a retardation plate, a semi-transmissive mirror, or the like) of the optical system may be arranged in the second window (opening) of the second housing. In this case, both of the at least one member of the optical system and the light-transmissive plate may be arranged in the second window (opening) of the second housing, or either one thereof may be arranged. The member (e.g., the light-transmissive plate or at least one member of the optical system) that enables the inside of the housing arranged in the second window (opening) to be visually recognized from the outside of the housing may function as a second viewport. A member (e.g., the light-transmissive plate or at least one member of the optical system) that is arranged in the second window (opening) and transmits at least a part of the light emitted from the display panel may function as the second viewport.

The display device of the present disclosure may be configured by only the second housing in which the display panel and the optical system are arranged. The display device of the present disclosure may be configured by installing the second housing in the first housing. For example, a display device such as a digital room mirror may be configured by installing, in the housing such as the digital room mirror, the second housing in which the display panel and the optical system are arranged. In the display device of the present disclosure, the first housing may include an opening, and the second housing may be insertable from the opening.

The display device of the present disclosure may include the second housing that is installable in the first housing including the first viewport and includes the second viewport, or may include the first housing including the first viewport and the second housing that is installed in the first housing and includes the second viewport. The display device of the present disclosure may include the display panel for emitting display light, the display panel including a display surface having a planar shape positioned in the second housing and arranged to face the first viewport and the second viewport and the optical system positioned in the second housing and configured to form an image of the display light. The optical system may include a first semi-transmissive mirror having a function of reflecting light toward the display panel and diffusing, concentrating, or converging the light, and a second semi-transmissive mirror positioned between the display panel and the first semi-transmissive mirror, and having a function of reflecting light toward the first semi-transmissive mirror and concentrating or converging the light.

Shapes of the first housing and the second housing are not particularly limited. For example, two housings 36 may be prepared, and the two housings 36 may be the first housing and the second housing, respectively, and the windows (openings) 37 of the two housings 36 may be the first viewport and the second viewport, respectively. The housing 36 may be the second housing, and the window (opening) 37 of the housing 36 may be the second viewport. In this case, a housing in which the housing 36, which is the second housing, is installable may be the first housing. The housing 36 may be the first housing, and the window (opening) 37 of the housing 36 may be the first viewport. In this case, a housing installable in the housing 36, which is the first housing, may be the second housing. The display panel may be the display panel 2, the optical system may be any of the optical system 3, the optical system 10, the optical system 16, and the optical system 35, the first semi-transmissive mirror may be the first semi-transmissive mirror 601, and the second semi-transmissive mirror may be the second semi-transmissive mirror 603.

The present disclosure is not limited to the above-described embodiments, and various variations, improvements, and the like are possible within the scope of the gist of the present disclosure. Embodiments obtained by appropriately combining the technical means disclosed in different embodiments are also included in the technical scope of the invention related to the present disclosure. For example, the functions included in each of the components and the like can be rearranged as long as inconsistencies are logically avoided, and a plurality of components or the like can be combined into one or divided. In other words, note that a person skilled in the art can easily make various variations or corrections based on the present disclosure. Note that these changes, variations, or corrections fall within the scope of the present disclosure. The retardation plate described in the present description may be a film-shaped member.

The display device of the present disclosure can be implemented in the following aspects.

(1) A display device including:

a display panel that emits display light;
a first retardation plate;
a second retardation plate arranged apart from the first retardation plate;
a semi-transmissive mirror arranged between the first retardation plate and the second retardation plate and including a reflective surface capable of reflecting light toward the second retardation plate;
a reflective polarizing plate arranged on an opposite side to the first retardation plate relative to the second retardation plate and transmitting first linearly polarized light to reflect second linearly polarized light; and
a retardation member arranged between the display panel and the first retardation plate and arranged, allowing an optical axis to be substantially parallel or substantially perpendicular to a transmission axis of the reflective polarizing plate,
wherein the first retardation plate and the second retardation plate convert the display light into the second linearly polarized light, and
the second retardation plate converts the second linearly polarized light into the first linearly polarized light before the second linearly polarized light reflected by the reflective polarizing plate is reflected by the semi-transmissive mirror to be incident on the reflective polarizing plate again.

(2) A display device including:

a display panel that emits display light;
a first retardation plate;
a second retardation plate arranged apart from the first retardation plate;
a semi-transmissive mirror arranged between the first retardation plate and the second retardation plate and including a reflective surface capable of reflecting light toward the second retardation plate;
a reflective polarizing plate arranged on an opposite side to the first retardation plate relative to the second retardation plate and transmitting first linearly polarized light to reflect second linearly polarized light; and
a retardation member arranged between the first retardation plate and the second retardation plate and arranged, allowing an optical axis to be substantially parallel or substantially perpendicular to a transmission axis of the reflective polarizing plate,
wherein the first retardation plate and the second retardation plate convert the display light into the second linearly polarized light, and
the second retardation plate converts the second linearly polarized light into the first linearly polarized light before the second linearly polarized light reflected by the reflective polarizing plate is reflected by the semi-transmissive mirror to be incident on the reflective polarizing plate again.

(3) The display device according to (2), in which the retardation member includes two retardation plates having the same phase difference provided to transmitted light.

(4) A display device including:

a display panel that emits display light;
a first retardation plate;
a second retardation plate arranged apart from the first retardation plate;
a semi-transmissive mirror arranged between the first retardation plate and the second retardation plate and including a reflective surface capable of reflecting light toward the second retardation plate;
a reflective polarizing plate arranged on an opposite side to the first retardation plate relative to the second retardation plate and transmitting first linearly polarized light to reflect second linearly polarized light; and
a retardation member arranged between the second retardation plate and the reflective polarizing plate and arranged, allowing an optical axis to be substantially parallel or substantially perpendicular to a transmission axis of the reflective polarizing plate,

wherein the first retardation plate and the second retardation plate convert the display light into the second linearly polarized light, and

the second retardation plate converts the second linearly polarized light into the first linearly polarized light before the second linearly polarized light reflected by the reflective polarizing plate is reflected by the semi-transmissive mirror to be incident on the reflective polarizing plate again.

(5) A display device including:

a display panel that emits display light;

a first retardation plate;

a second retardation plate arranged apart from the first retardation plate;

a semi-transmissive mirror arranged between the first retardation plate and the second retardation plate and including a reflective surface capable of reflecting light toward the second retardation plate;

a reflective polarizing plate arranged on an opposite side to the first retardation plate relative to the second retardation plate and transmitting first linearly polarized light to reflect second linearly polarized light;

a third retardation plate arranged between the display panel and the first retardation plate and arranged, allowing an optical axis to be substantially parallel or substantially perpendicular to a transmission axis of the reflective polarizing plate; and

a fourth retardation plate arranged between the second retardation plate and the reflective polarizing plate and arranged, allowing an optical axis to be substantially parallel or substantially perpendicular to a transmission axis of the reflective polarizing plate,

wherein the first retardation plate and the second retardation plate convert the display light into the second linearly polarized light, and

the second retardation plate converts the second linearly polarized light into the first linearly polarized light before the second linearly polarized light reflected by the reflective polarizing plate is reflected by the semi-transmissive mirror to be incident on the reflective polarizing plate again.

REFERENCE SIGNS

1, 1A, 1A', 1B Display device
2 Display panel
2a Display surface
3 Optical system
4 Irradiator
5 First retardation plate
6 Semi-transmissive mirror
6a Reflective surface
7 Second retardation plate
8 Reflective polarizing plate
9 Optical element
10 Optical system
11 First semi-transmissive mirror
11a Reflective surface
12 First retardation plate
13, 13' Second semi-transmissive mirror
13a, 13'a Reflective surface
14 Second retardation plate
15 Polarizing plate
16 Optical system
17 First semi-transmissive mirror
17a Reflective surface
18 First retardation plate
19 Second semi-transmissive mirror
19a Reflective surface
19b Reflective surface

20 Second retardation plate
21 Third semi-transmissive mirror
21a Reflective surface
22 User
22L Left eye
22R Right eye
23 Mobile body
24 Windshield
25 Third retardation plate
26 Fourth retardation plate
27 Housing
28 Opening
29 Cluster
30 CID
31 PID
32 RSE
33 Fresnel lens
33a First surface
33b Second surface
33c Reference point
34 Semi-transmissive reflective layer
35 Optical system
36 Housing
37 Window
38 Light-transmissive plate
39, 40 Moth-eye structure film
41 Touch panel
42 Convex lens
43 Controller
100 Image-forming device
101 Reflective optical element
102 Camera
200 Display system
201 Camera
401 First region
402 Second region
403 Center of virtual image
404 Normal with respect to center of virtual image
405 Center of user
406 Part of second region positioned above and below first region
407 Part of second region positioned side of first region
408 First end
409 Center of window
410 First straight line
411 Second end
412 Second straight line
413 and 414 Both end points of virtual image
415 and 416 Both end points of semi-transmissive mirror
417 and 418 Two straight lines connecting both end points of virtual image and both end points of semi-transmissive mirror
419 Intersection of two straight lines respectively connecting both end points of virtual image and both end points of semi-transmissive mirror
420 End point of semi-transmissive mirror
421 Shielding wall
422 Visual recognition surface
423 Controller
424 Base member
425 Reflective polarizing plate

EP 4 787 056 A1

426 Base member
427 Display system
428 Concave mirror portion
429 Concave mirror portion
501 Display device
f6 Focal point of semi-transmissive mirror
L6 Length of semi-transmissive mirror in longitudinal direction
L37 Length of window along longitudinal direction
Lf6 Focal length of semi-transmissive mirror
V428 Virtual image
V429 Virtual image
WL Longitudinal direction of window
601 First semi-transmissive mirror
601' Focal point of first semi-transmissive mirror
602 First image
603 Second semi-transmissive mirror
603' Focal point of second semi-transmissive mirror
604 Second image
605 Retardation member
606 Third retardation plate
607 Fourth retardation plate
d60A Separation distance between first image and second semi-transmissive mirror
d60B Separation distance between display panel and first semi-transmissive mirror
f601 Focal length of first semi-transmissive mirror
f603 Focal length of second semi-transmissive mirror

**Claims**

1. A display device not mounted on a user, the display device comprising:

   a housing comprising a viewport;
   a display panel configured to emit display light, the display panel comprising a display surface having a planar shape positioned in the housing and arranged to face the viewport; and
   an optical system positioned in the housing and configured to form an image of the display light, wherein the optical system comprises
   a first semi-transmissive mirror having a function of reflecting light toward the display panel and diffusing, concentrating, or converging the light, and
   a second semi-transmissive mirror positioned between the display panel and the first semi-transmissive mirror, and having a function of reflecting light toward the first semi-transmissive mirror and concentrating or converging the light.

2. The display device according to claim 1, wherein
   a focal length of the first semi-transmissive mirror is longer than a separation distance between the display panel and the first semi-transmissive mirror.

3. The display device according to claim 2, wherein

   the first semi-transmissive mirror forms an image of the display light to form a first image, and
   a focal length of the second semi-transmissive mirror is longer than a separation distance between the first image and the second semi-transmissive mirror.

4. The display device according to claim 2, wherein

   the first semi-transmissive mirror forms an image of the display light to form a first image, and
   a focal length of the second semi-transmissive mirror is shorter than a separation distance between the first image and the second semi-transmissive mirror.

**5.** The display device according to claim 1, wherein
a focal length of the first semi-transmissive mirror is shorter than a separation distance between the display panel and the first semi-transmissive mirror.

**6.** The display device according to claim 5, wherein

the first semi-transmissive mirror forms an image of the display light to form a first image,
the first image is positioned on the opposite side to the display panel relative to the second semi-transmissive mirror, and
the focal length of the second semi-transmissive mirror is longer than the separation distance between the first image and the second semi-transmissive mirror.

**7.** The display device according to claim 5, wherein

the first semi-transmissive mirror forms an image of the display light to form a first image,
the first image is positioned on the opposite side to the display panel relative to the second semi-transmissive mirror, and
the focal length of the second semi-transmissive mirror is shorter than the separation distance between the first image and the second semi-transmissive mirror.

**8.** The display device according to any one of claims 3, 4, 6, and 7, wherein
the focal length of the second semi-transmissive mirror is longer than the focal length of the first semi-transmissive mirror.

**9.** The display device according to any one of claims 3, 4, 6, and 7, wherein
the focal length of the second semi-transmissive mirror is shorter than the focal length of the first semi-transmissive mirror.

**10.** A mobile body comprising:
the display device according to claim 1.

**11.** A display panel housing device not mounted on a user, the display panel housing device comprising:

a housing comprising a display panel installation portion on which a display panel having a display surface is installable, and a viewport arranged to face the display surface; and
an optical system positioned in the housing and configured to form a planar image of display light emitted from the display surface, wherein
the optical system comprises
a first semi-transmissive mirror having a function of reflecting light toward the display panel installation portion and diffusing, concentrating, or converging the light, and
a second semi-transmissive mirror positioned between the display panel installation portion and the first semi-transmissive mirror, and having a function of reflecting light toward the first semi-transmissive mirror and concentrating or converging the light.

**12.** A display device comprising:

a second housing that is installable in a first housing comprising a first viewport and comprises a second viewport;
a display panel configured to emit display light, the display panel comprising a display surface having a planar shape positioned in the second housing and arranged to face the first viewport and the second viewport and
an optical system positioned in the second housing and configured to form an image of the display light, wherein
the optical system comprises
a first semi-transmissive mirror having a function of reflecting light toward the display panel and diffusing, concentrating, or converging the light, and
a second semi-transmissive mirror positioned between the display panel and the first semi-transmissive mirror, and having a function of reflecting light toward the first semi-transmissive mirror and concentrating or converging the light.

**13.** A display device comprising:

a first housing comprising a first viewport;

a second housing installed in the first housing and comprising a second viewport;

a display panel configured to emit display light, the display panel comprising a display surface having a planar shape positioned in the second housing and arranged to face the first viewport and the second viewport and

an optical system positioned in the second housing and configured to form an image of the display light, wherein the optical system comprises

a first semi-transmissive mirror having a function of reflecting light toward the display panel and diffusing, concentrating, or converging the light, and

a second semi-transmissive mirror positioned between the display panel and the first semi-transmissive mirror, and having a function of reflecting light toward the first semi-transmissive mirror and concentrating or converging the light.

FIG. 1

# FIG. 2

# FIG. 3

FIG. 4

FIG. 5

FIG. 6

**FIG. 7**

**FIG. 8**

FIG. 9

FIG. 10

# FIG. 11

# FIG. 12

44

# FIG. 13

FIG. 14

FIG. 15A

FIG. 15B

FIG. 15C

FIG. 15D

FIG. 16A

FIG. 16B

FIG. 16C

# FIG. 16D

PHASE DIFFERENCE (nm)

# FIG. 17

FIG. 18

FIG. 19

FIG. 20

FIG. 21

FIG. 22

53

# FIG. 23

FIG. 24

FIG. 25

FIG. 26

FIG. 27

FIG. 28

# FIG. 29

FIG. 30

FIG. 31

# FIG. 32

EP 4 787 056 A1

429

V429

427

Y

Z ← ⊙ → X

# FIG. 33A

FIG. 33B

EP 4 787 056 A1

| REFERENCE SIGNS | | THICKNESS | NOTES |
|---|---|---|---|
| 2 | DISPLAY PANEL | <1.5mm | |
| 5 | FIRST RETARDATION PLATE | <0.05mm | |
| 39 | MOTH-EYE STRUCTURE FILM | 0.1mm | |
| 6 | SEMI-TRANSMISSIVE MIRROR | 2mm | WARPAGE AMOUNT 6-6 IS 20 TO 30 mm |
| 40 | MOTH-EYE STRUCTURE FILM | 0.1mm | |
| 26 | FOURTH RETARDATION PLATE | <0.05mm | |
| 25 | THIRD RETARDATION PLATE | <0.05mm | |
| 7 | SECOND RETARDATION PLATE | <0.05mm | |
| 8 | REFLECTIVE POLARIZING PLATE | 0.08mm | |
| 38 | LIGHT-TRANSMISSIVE PLATE | 0.5mm | |
| 6-40 | SPACE | 40 TO 70 mm | |
| 36-36 | TOTAL HOUSING THICKNESS | 80 mm (SPACE 43 mm) | |
| 2-8 | DISTANCE BETWEEN DISPLAY PANEL AND REFLECTIVE POLARIZING PLATE (INCLUDING 2, 8 MEMBERS) | 47.5 TO 77.5 mm | SPATIAL DISTANCE SETTING DEPENDENT |

# FIG. 34

# FIG. 35

FIG. 36

FIG. 37

FIG. 38

FIG. 39

FIG. 40

FIG. 41

FIG. 42

FIG. 43

FIG. 44

FIG. 45

FIG. 46

FIG. 47

2    5,12    6,13,13'    7,14    8,15

605

Y
↑
X⊗──→Z

# FIG. 48

2    5,12    6,13,13'    7,14    8,15

606    607

Y
↑
X⊗──→Z

# FIG. 49

**TRANSLATION**

## INTERNATIONAL SEARCH REPORT

International application No.

**PCT/JP2025/032891**

| A. | CLASSIFICATION OF SUBJECT MATTER |
|---|---|

*G02B 27/02*(2006.01)i
FI:   G02B27/02 Z

According to International Patent Classification (IPC) or to both national classification and IPC

| B. | FIELDS SEARCHED |
|---|---|

Minimum documentation searched (classification system followed by classification symbols)

G02B27/00-27/64; B60K35/23; B60R1/00-1/04,1/08-1/31

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2023-179892 A (JVC KENWOOD CORP.) 20 December 2023 (2023-12-20) | 1-2, 5, 10-11 |
| | paragraphs [0002]-[0005], [0011]-[0046], fig. 1-4 | |
| Y | paragraphs [0002]-[0005], [0011]-[0046], fig. 1-4 | 12-13 |
| A | paragraphs [0002]-[0005], [0011]-[0046], fig. 1-4 | 3-4, 6-9 |
| X | JP 07-174973 A (OLYMPUS OPTICAL CO., LTD.) 14 July 1995 (1995-07-14) | 1-2, 5, 11 |
| | paragraphs [0002]-[0050], fig. 1-10 | |
| A | paragraphs [0002]-[0050], fig. 1-10 | 3-4, 6-10, 12-13 |
| Y | JP 11-078693 A (NILES PARTS CO., LTD.) 23 March 1999 (1999-03-23) | 12-13 |
| | paragraphs [0001], [0009]-[0025], fig. 1-7 | |
| A | WO 2022/176758 A1 (FUJIFILM CORPORATION) 25 August 2022 (2022-08-25) | 1-13 |
| | entire text, all drawings | |
| A | US 2019/0243147 A1 (DISNEY ENTERPRISES, INC.) 08 August 2019 (2019-08-08) | 1-13 |
| | entire text, all drawings | |

☑ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **07 November 2025** | **25 November 2025** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## EP 4 787 056 A1

### INTERNATIONAL SEARCH REPORT

International application No.

**PCT/JP2025/032891**

| C. | DOCUMENTS CONSIDERED TO BE RELEVANT | |
|---|---|---|
| Category* | Citation of document, with indication, where appropriate, of the relevant passages | Relevant to claim No. |
| P, A | JP 2025-027495 A (FUJIFILM CORPORATION) 28 February 2025 (2025-02-28) entire text, all drawings | 1-13 |

Form PCT/ISA/210 (second sheet) (July 2022)

76

TRANSLATION

**INTERNATIONAL SEARCH REPORT**
Information on patent family members

International application No.

**PCT/JP2025/032891**

| Patent document cited in search report | | | Publication date (day/month/year) | Patent family member(s) | Publication date (day/month/year) |
|---|---|---|---|---|---|
| JP | 2023-179892 | A | 20 December 2023 | (Family: none) | |
| JP | 07-174973 | A | 14 July 1995 | US 5659430 A column 1, line 63 to column 2, line 13, column 2, line 43 to column 8, line 5, column 8, line 52 to column 9, line 28, column 11, line 14 to column 12, line 19, column 13, line 36 to column 16, line 37, fig. 1, 4, 6-11, 14, 25 | |
| JP | 11-078693 | A | 23 March 1999 | (Family: none) | |
| WO | 2022/176758 | A1 | 25 August 2022 | US 2023/0400694 A1 entire text, all drawings CN 116848454 A | |
| US | 2019/0243147 | A1 | 08 August 2019 | (Family: none) | |
| JP | 2025-027495 | A | 28 February 2025 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022063533 A